# EUROPÄISCHE PATENTSCHRIFT

(11) **EP 3 570 945 B1**
(45) Veröffentlichungstag und Bekanntmachung des Hinweises auf die Patenterteilung: **04.06.2025**
(21) Anmeldenummer: 18702056.5
(22) Anmeldetag: 04.01.2018
(51) Int. Cl.: B63B 34/10, G03B 17/08, A63B 35/12, A63B 71/06, B63C 11/46

(54) **SCHWIMM- UND TAUCHHILFE MIT EINER KAMERA**
SWIMING AND DIVING SCOOTER WITH CAMERA
PROPULSEUR DE PLONGÉE ET AIDE À LA FLOTTABILITÉ AVEC CAMÉRA

(30) Priorität: 20.01.2017 DE 102017101146
(43) Veröffentlichungstag der Anmeldung: 27.11.2019
(73) Patentinhaber: CAYAGO TEC GmbH, 32108 Bad Salzuflen (DE)
(72) Erfinder: WALPURGIS, Hans-Peter, 6352 Ellmau (AT)
(74) Vertreter: Herrmann, Jochen
(86) Internationale Anmeldenummer: PCT/EP2018/050213
(87) Internationale Veröffentlichungsnummer: WO 2018/134060

(56) Entgegenhaltungen:
- WO-A1-2016/065294
- DE-A1- 102015 100 497
- US-A- 2 918 889

## Beschreibung

Die Erfindung betrifft eine Schwimm- und Tauchhilfe mit einem Rumpf, der einen Strömungskanal aufweist oder dem ein Strömungskanal zugeordnet ist, wobei dem Strömungskanal eine motorbetriebene Wasser-Beschleunigungsanordnung, insbesondere ein Propeller, zugeordnet ist, mit einer Auflagefläche für einen Oberkörper auf einer Oberseite des Rumpfes, mit an der Schwimm- und Tauchhilfe angebrachten Haltegriffen, wobei an den Haltegriffen Bedienelemente zur Steuerung der Wasser-Beschleunigungsanordnung mittels einer zugeordneten Motorsteuerung vorgesehen sind, und mit einem der Auflagefläche zugewandten Display zur Anzeige von Betriebsparametern der Schwimm- und Tauchhilfe.

Ein derartiges, insbesondere im Freizeitbereich als Tauchschlitten eingesetztes Wasserfahrzeug ist aus der DE 10 2004 049 615 A1 bekannt. Es weist eine Griffanordnung auf, an der sich ein Benutzer festhalten kann, während er mit einem Teilbereich seines Oberkörpers oberseitig auf dem Rumpf des Wasserfahrzeuges aufliegt. Innerhalb des Rumpfes ist ein Strömungskanal angeordnet, in dem ein Propeller untergebracht ist. Der Propeller wird von einem Elektromotor angetrieben, der über einen Akkumulator mit Strom versorgt wird.

Um mit den bekannten Wasserfahrzeugen sowohl einen Fahrbetrieb unter Wasser als auch auf dem Wasser durchführen zu können, ist eine genaue Gewichtstarierung erforderlich. Dementsprechend sollte das Wasserfahrzeug so viel Auftrieb entwickeln, dass es ausreichend schwimmfähig ist und mithin nicht untergehen kann. Der Auftrieb sollte allerdings nicht zu stark sein, sodass ein schneller Wechsel von der Überwasserfahrt auf die Tauchfahrt möglich ist. Aufgrund des Eigengewichts der elektrischen Einbauten muss das Wasserfahrzeug im Rumpf einen ausreichend großen Auftriebskörper aufweisen, der die Baugröße und damit die Fahrdynamik des Wasserfahrzeuges beeinflusst. Weiterhin können Flutungsräume innerhalb des Rumpfes vorgesehen sein, die sich mit Wasser füllen und dabei für eine optimale Gewichtstarierung im Betrieb sorgen. Zum Transport außerhalb des Wassers werden die Flutungsräume entleert, so dass das Wasserfahrzeug ein geringes Eigengewicht aufweist.

Die Anordnung der verschiedenen Komponenten des Wasserfahrzeugs ist so gewählt, dass das Wasserfahrzeug sowohl mit wie ohne aufliegendem Benutzer stabil und mit seiner Oberseite nach oben im Wasser liegt. Dabei erfolgt die Masseverteilung derart, dass das Wasserfahrzeug aufrecht und ohne Krängung im Wasser liegt. Die Masseverteilung erfolgt vorzugsweise symmetrisch zu einer vom Bug zum Heck des Wasserfahrzeugs verlaufenden Symmetriefläche zwischen der Steuerbord- und der Backbordseite des Wasserfahrzeugs.

Das Wasserfahrzeug weist eine äußere Form auf, die einen geringen Strömungswiderstand gewährleistet, so dass der Energieverbrauch des Wasserfahrzeugs möglichst gering ist. Dabei ist das Gewicht des Wasserfahrzeugs derart ausgelegt, dass es tragbar ist.

Aus der Schrift US 6,115,060 ist ein Haltesystem mit einer Aufnahmehülse für eine Videokamera bekannt. Die Aufnahmehülse ist in Blickrichtung der Kamera von einer transparenten Abdeckung oder von einem optischen Element abgeschlossen. In einen Bootsrumpf ist ein Durchbruch eingebracht, an dem eine Fassung festgelegt ist. Die Fassung weist dazu eine Hülse mit einem Außengewinde und mit einem endseitigen, umlaufenden Flansch auf. Sie ist durch den Durchbruch im Bootsrumpf gesteckt, so dass der umlaufende Flansch von außen an dem Rumpf anliegt. Von der Innenseite des Rumpfes ist ein Flanschelement mit einem Innengewinde auf das Außengewinde der Hülse aufgeschraubt, so dass der Rand des Durchbruchs zwischen dem außen und dem innen anliegenden Flansch abgedichtet eingeklemmt ist. Die Aufnahmehülse mit der Kamera ist in die Hülse der Fassung eingesteckt und umlaufend mit Dichtringen abgedichtet. Endseitig ist eine Abdeckkappe auf das Außengewinde der Hülse aufgeschraubt, welche die Aufnahmehülse axial festlegt. Nachteilig kann bei der in der US 6,115,060 gezeigten Befestigung der Videokamera an einem Bootsrumpf diese nur in Richtung der Flächennormalen des Bootsrumpfes im Bereich des vorgesehenen Durchbruchs ausgerichtet werden. Um eine andere Blickrichtung zu ermöglichen sind zusätzliche optische Elemente, wie beispielsweise Prismen, erforderlich oder die Kamera muss in der Aufnahmehülse, beispielsweise durch ein aufwändig drehbar gelagertes Gehäuse, beweglich angeordnet werden. Da insbesondere im Bereich des Bugs von Wasserfahrzeugen zumeist keine in Fahrtrichtung ausgerichteten Flächenbereiche des Rumpfs vorhanden sind, sind nach vorne blickende Videoaufnahmen nur durch Verwendung solcher kostenintensiver optischen Elemente oder beweglicher Gehäusekomponenten möglich. Um nicht verwackelte Videoaufnahmen zu ermöglicht ist es weiterhin erforderlich, dass der Bootsrumpf im Bereich der Durchführung eine ausreichende Biegesteifigkeit aufweist, um Vibrationen zu vermeiden. Dies ist insbesondere für tragbar ausgeführte Wasserfahrzeuge mit dünnen Wandstärken des Rumpfes und mit hoher Antriebsleistung nicht gewährleistet. Ein weiterer Nachteil ergibt sich daraus, dass der Rumpf im Bereich des Durchbruchs eben ausgeführt sein muss, um eine wasserdichte Montage des Haltesystems mittels des Flanschs und des aufgeschraubten Flanschelements zu ermöglichen. Bei strömungstechnisch optimierten Wasserfahrzeugen, welche auch für den Tauchbetrieb ausgelegt sind, sind solche ebenen Flächenbereiche insbesondere im Bereich des Bugs des Wasserfahrzeugs nicht vorhanden, so dass eine frontseitige Anbringung der Videokamera nicht möglich ist.

Aus der WO 2015/034382 A1 ist ein selbstfahrendes Wasserfahrzeug, insbesondere für die Seerettung, bekannt. Das Wasserfahrzeug ist U-förmig ausgelegt, wobei in jedem als Schwimmer ausgeführten Schenkel eine elektrisch betriebene Antriebsturbine angeordnet ist. Die Turbinen sind schwenkbar gelagert. Das Wasserfahrzeug kann so beliebig mit einer seiner beiden Oberflächen auf dem Wasser liegen, wobei die Turbinen zu dem Wasser zugewandten WasserEintrittsöffnungen schwenken, von dort das Wasser ansaugen und am Ende der Schenkel wieder ausstoßen. Seitlich der Schenkel sind Handgriffe angeordnet, an denen sich eine Person festhalten kann. Das Wasserfahrzeug kann über eine Fernbedienung gesteuert werden. Dem Wasserfahrzeug können nicht näher beschrieben Kameras zugeordnet sein, welche Signale zu einer Zentrale schicken. Die WO2012/089951 zeigt eine Tauchhilfe mit einer über einen schwenkbaren Rahmen an der Tauchhilfe befestigten (Digital-) Kamera. Diese ist zum Boden des Gewässers ausgerichtet und dient der Aufnahme des dortigen Lebensraums. Zur Bestimmung des Abstandes zum Boden sind Laser an dem Rahmen montiert. Gezeigt ist weiterhin eine Auslöseeinheit, die ein automatisches Fotografieren zu einem vorbestimmten Zeitpunkt oder in regelmäßigen Zeitabständen ermöglicht. Der Rahmen mit der montierten Kamera erhöht den Strömungswiderstand der Tauchhilfe erheblich und ist lediglich für eine langsame Tauchfahrt geeignet.

Die US59195256A zeigt eine weitere Tauchhilfe mit einer Frontkamera.

Es ist Aufgabe der Erfindung, eine Schwimm- und Tauchhilfe der eingangs erwähnten Art bereitzustellen, welche bei niedrigem Strömungswiderstand der Schwimm- und Tauchhilfe und einfacher Bedienung in Fahrtrichtung aufgenommene Videoaufnahmen ermöglicht.

Die Aufgabe der Erfindung wird durch eine Schwimm- und Tauchhilfe gemäß des Anspruchs 1 gelöst. Die Aufgabe der Erfindung wird insbesondere dadurch gelöst, dass in Fahrtrichtung vor der Auflagefläche eine nach vorne ausgerichtete Frontkamera in dem Rumpf integriert und mit einer Steuerelektronik verbunden ist, dass die Steuerelektronik zur Ansteuerung der Frontkamera und zum Empfang der Kamerasignale ausgebildet ist und dass an zumindest einem Haltegriff ein Schaltelement zum Starten und zum Beenden einer Videoaufnahme angeordnet ist. Die Frontkamera ermöglicht die Erstellung von Videoaufnahmen in Fahrtrichtung der Schwimm- und Tauchhilfe. Dabei ist sie in Blickrichtung eines Fahrers der Schwimm- und Tauchhilfe ausgerichtet, sodass sie vorteilhaft die Bildausschnitte aufnimmt, denen sich ein Fahrer mit der Schwimm- und Tauchhilfe zuwendet. Die Ausrichtung der Frontkamera in Fahrtrichtung und vor der Auflagefläche des Fahrers wird durch die Integration der Frontkamera in den Rumpf der Schwimm- und Tauchhilfe ermöglicht. Dabei erfolgt die Integration derart, dass die äußere Form des Rumpfes im Bereich der Frontkamera zumindest weitestgehend erhalten bleibt. Die Frontkamera kann in Rumpfbereichen mit kleinen Radien der Rumpf-Außenkontur angeordnet werden, wie diese vorwiegend im strömungstechnisch optimierten Bugbereich der Schwimm- und Tauchhilfe vorliegen. Außerhalb des Rumpfes sind keine Kamerateile oder Halter für die Frontkamera angeordnet. Der Strömungswiderstand der Schwimm- und Tauchhilfe wird somit durch die Frontkamera nicht beeinträchtigt. Das an dem Haltegriff angebrachte Schaltelement zum Starten und zum Beenden von Videoaufnahmen ermöglicht auch bei sportlicher Fahrweise eine einfache, sichere und intuitive Bedienung der Frontkamera

Aufnahmen des Fahrers (Selfie) der hauptsächlich im Freizeitbereich eingesetzten Schwimm- und Tauchhilfe können dadurch ermöglicht werden, dass vor der Auflagefläche eine nach hinten ausgerichtete Rückkamera angeordnet und mit der Steuerelektronik verbunden ist. Vorteilhaft erfolgt die Ansteuerung der Rückkamera sowie die Erfassung der von der Rückkamera gesendeten Videosignale von der gleichen Steuerelektronik, mit der auch die Frontkamera verbunden ist. Dies ermöglicht einen einfachen und kostengünstigen Aufbau des mit zwei unterschiedlich ausgerichteten Kameras aufgebauten Videosystems.

Eine einfache und leicht zu bedienende Auswahl der zu aktivierenden Kamera kann dadurch ermöglicht werden, dass an zumindest einem Haltegriff ein Umschaltelement zum Umschalten zwischen den beiden Kameras, über welche die Videoaufnahme jeweils erfolgt, angeordnet ist. Das Umschaltelement ist wie das Schaltelement an einem Haltegriff der Schwimm- und Tauchhilfe angeordnet und damit für einen Fahrer leicht zu erreichen. Vorteilhaft ist das Schaltelement an einem Haltegriff und das Umschaltelement an dem anderen Haltegriff der Schwimm- und Tauchhilfe angebracht.

Um eine Überwachung der aktuell getätigten Videoaufnahme zu ermöglichen kann es vorgesehen sein, dass das Display mit der Steuerelektronik der Kameras verbunden und dazu ausgelegt ist, die mit der jeweils ausgewählten Kamera getätigte Aufnahme anzuzeigen. Vorteilhaft ermöglichen die Steuerelektronik und das Display auch die Wiedergabe bereits aufgenommene Videosequenzen, sodass diese beispielsweise bewertet und gelöscht werden können, um Speicherplatz für weitere Videoaufnahmen freizugeben.

Ist es vorgesehen, dass eine LCD-Anzeige des Displays, die Rückkamera und die Steuerelektronik in einem wasserdicht ausgebildeten, einteiligen oder zweiteiligen Gehäuse angeordnet sind, so können die Bauteile korrekt ausgerichtet und erschütterungsfest angeordnet werden. Bei einem zweiteiligen Aufbau können die Gehäuseteile vorzugsweise wasserdicht miteinander verbunden werden. Durch den wasserdichten Aufbau gelangt weder Wasser von außen noch von Wasser von einem Flutungsraum der Schwimm- und Tauchhilfe in das oder die Gehäuse. Die Integration der Bauteile in einem einteiligen oder zweiteiligen Gehäuse ermöglicht kurze und damit störungsarme elektrische Verbindungen der Bauteile.

Die Anzeige der Videoaufnahmen sowie die Aufnahme von Videos mit der Rückkamera kann dadurch ermöglicht werden, dass das wasserdicht ausgebildete Gehäuse zumindest im Bereich der LCD-Anzeige oder im Bereich der LCD-Anzeige und der Rückkamera von einer transparenten Displayabdeckung abgedeckt ist. Die Displayabdeckung bietet dabei einen mechanischen Schutz der LCD-Anzeige und der Rückkamera und verhindert weiterhin, dass Wasser in das Gehäuse eindringt.

Entsprechend einer bevorzugten Ausgestaltungsvariante der Erfindung kann es vorgesehen sein, dass die Steuerelektronik über einen Datenbus mit der Motorsteuerung verbunden ist, dass die Schaltsignale des Schaltelements und/oder des Umschaltelements der Motorsteuerung zugeführt sind und dass die Steuerelektronik dazu ausgebildet ist, die Schaltsignale des Schaltelements und/oder des Umschaltelements von der Motorsteuerung abzufragen. Dem Umschaltelement und dem Schaltelement können so Doppelfunktionen zugewiesen sein, indem sie je nach Menüauswahl zur Einstellung beispielsweise von Betriebsparametern zur Steuerung des Antriebsmotors oder zur Steuerung von Videoaufnahmen verwendet sind. Dabei wird eine hohe Ausfallsicherheit erreicht, da die Ansteuerung der Motorsteuerung über das Schaltelement oder das Umschaltelement auch bei Ausfall der Steuerelektronik des Videosystems weiter möglich ist.

Um einen versehentlichen Start einer Videoaufnahme, beispielsweise beim Transport oder bei der Lagerung der Schwimm- und Tauchhilfe außerhalb des Wassers, zu vermeiden kann es vorgesehen sein, dass die Steuereinheit dazu ausgebildet ist, eine Videoaufnahme zu ermöglichen, wenn eine Spannung an einem Elektromotor der Wasser-Beschleunigungsanordnung anliegt und eine Videoaufnahme nicht zu ermöglichen, wenn keine Spannung an dem Elektromotor der Wasser-Beschleunigungsanordnung anliegt. Zur Bestimmung, ob eine Spannung an dem Elektromotor anliegt, kann beispielsweise die an der Motorsteuerung eingestellte Leistungsstufe abgefragt werden. Vorteilhaft weist die Schwimm- und Tauchhilfe eine Vorrichtung auf, mit welcher auch bei sich drehendem Elektromotor ein Antrieb der Schwimm- und Tauchhilfe vermieden wird. Dies kann beispielsweise durch eine mechanische Entkopplung des Elektromotors von dem Propeller erfolgen.

Um aufgrund von Speicherplatzproblem verkürzte Videoaufnahmen zu vermeiden kann es vorgesehen sein, dass die Steuereinheit dazu ausgebildet ist, eine Videoaufnahme zu ermöglichen, wenn eine freie Speicherkapazität eines Speichers für die Videoaufnahmen einem vorgegebenen Grenzwert entspricht oder den vorgegebenen Grenzwert überschreitet und eine Videoaufnahme nicht zu ermöglichen, wenn die freie Speicherkapazität des Speichers für die Videoaufnahmen den vorgegebenen Grenzwert unterschreitet und/oder dass die Steuereinheit dazu ausgebildet ist, eine Videoaufnahme zu unterbrechen, wenn die freie Speicherkapazität des Speichers für die Videoaufnahmen einen vorgegebenen zweiten Grenzwert unterschreitet. Dabei können die beiden Grenzwerte gleich gewählt sein. Vorteilhaft kann es vorgesehen sein, dass der Grenzwert einer höheren Speicherkapazität als der zweite Grenzwert entspricht. Der Start einer Videoaufnahme wird dann nur ermöglicht, wenn die Speicherkapazität eine ausreichend lange Aufnahmezeit ermöglicht. Der Abbruch einer laufenden Videoaufnahme kann erfolgen, wenn die Speicherkapazität eine für die Funktion des Videosystems erforderliche untere Grenze erreicht hat

Eine bevorzugte Ausführungsvariante der Erfindung sieht vor, dass die Steuereinheit eine Funkschnittstelle, insbesondere eine Wi-Fi-Schnittstelle/W-Lan-Schnittstelle und/oder eine Bluetooth-Schnittstelle, aufweist und dass die Steuereinheit dazu ausgebildet ist, über die Funkschnittstelle Videodaten zu übertragen und/oder Software-Updates für sämtliche Hardwarekomponenten der Schwimm - und Tauchhilfe, beispielsweise die Ansteuerung der Kameras und/oder für die Ansteuerung des Displays und/oder für die Motorsteuerung und /oder für das Akkumanagement (Akkusteuerung) zu empfangen. Videodaten können so einfach auf einen externen Speicher, beispielsweise auf ein Smartphone, einen Laptop oder einen PC, übertragen werden. Die Software des Videosystems kann an Neuentwicklungen angepasst werden. Durch die Übertragung von Software-Updates für die Motorsteuerung wird eine zusätzliche Funktionalität der Schwimm- und Tauchhilfe ermöglicht. So können beispielsweise Fahreigenschaften der Schwimm-und Tauchhilfe an die Vorlieben eines Fahrers angepasst oder individuell eingestellt werden oder es können neu entwickelte Softwaresequenzen für die Motorsteuerung übertragen werden.

Um auch Tonaufnahmen zu ermöglichen kann es vorgesehen sein, dass der Frontkamera und/oder der Rückkamera ein Mikrofon zugeordnet ist und dass die aufgenommenen Audiosignale der Steuereinheit zugeführt sind. Die Tonsignale werden so zusammen mit den Videosignalen der jeweils aktiven Kamera aufgezeichnet. Kostengünstig ist nur einer Kamera ein Mikrofon zugeordnet. Dieses kann beispielsweise unabhängig davon, welche der Kameras gerade aktiv ist, Tonsignale aufnehmen.

Eine fehlerfreie Datenübertragung der Frontkamera zu der Steuerelektronik kann dadurch gewährleistet sein, dass die Frontkamera über eine digitale Schnittstelle, insbesondere eine USB-Schnittstelle, und ein Datenkabel mit der Steuereinheit verbunden ist.

Um eine fehlerfreie Datenübertragung der Rückkamera zu der Steuereinheit zu ermöglichen kann es vorgesehen sein, dass die Rückkamera über eine digitale Schnittstelle, insbesondere eine MIPI-Schnittstelle, mit der Steuereinheit verbunden ist.

Eine einfache und sichere Befestigung der Frontkamera mit, bezogen auf die Fahrtrichtung der Schwimm- und Tauchhilfe, nach vorne gerichtetem Blickwinkel kann dadurch ermöglicht werden, dass die Frontkamera in einer wasserdichten Kameraeinhausung angeordnet ist, dass die wasserdichte Kameraeinhausung in einer Frontkamera-Aufnahme innerhalb des Rumpfes aufgenommen und an dem Rumpf der Schwimm- und Tauchhilfe befestigt ist, dass die Rumpf-Außenhülle in Blickrichtung der Frontkamera eine Kameradurchführung aufweist, in der eine transparente Scheibe angeordnet ist, und dass die transparente Scheibe die wasserdichte Kameraeinhausung frontseitig abschließt.

Besonders bevorzugt kann es dabei vorgesehen sein, dass die Frontkamera-Aufnahme in räumlicher Verbindung zu einem Flutungsraum der Schwimm- und Tauchhilfe steht. Der Flutungsraum der Schwimm- und Tauchhilfe steht über Wassereintritts- und Wasseraustrittsöffnungen in Verbindung mit dem umgebenden Wasser. Er wird im Betrieb der Schwimm- und Tauchhilfe von Wasser durchflutet. Dadurch erfolgt eine exakte Einstellung des Auftriebs der Schwimm- und Tauchhilfe. In dem Flutungsraum können elektrische Komponenten der Schwimm- und Tauchhilfe, beispielsweise der Elektromotor, erforderlich Akkumulatoren oder die Motorsteuerung, jeweils entsprechend abgedichtet angeordnet sein. Die Verlustwärme der elektrischen Komponenten wird so effektiv abgeführt. An Land läuft das Wasser durch die Wassereintritts- und Wasseraustrittsöffnungen aus dem Flutungsraum, sodass das Gewicht der Schwimm- und Tauchhilfe deutlich reduziert wird. Durch die wasserdichte Ausbildung der Kameraeinhausung kann diese in der mit dem Flutungsraum verbundenen Frontkamera-Aufnahme angeordnet und im Schwimm- und Tauchbetrieb von Wasser umgeben sein. Eine gesonderte Abdichtung der Frontkamera-Aufnahme sowohl nach außen als auch nach innen zum Flutungsraum ist somit nicht erforderlich. Dies ermöglicht einen einfachen Aufbau des Rumpfes der Schwimm- und Tauchhilfe.

Vorteilhaft kann es vorgesehen sein, dass die transparente Scheibe oder ein Scheibengehäuse, in dem die transparente Scheibe gehalten ist, gegenüber der Kameradurchführung abgedichtet ist oder dass zwischen der transparenten Scheibe oder dem Scheibengehäuse, in dem die transparente Scheibe gehalten ist, und der Kameradurchführung ein wasserdurchgängiger Spalt ausgebildet ist. Durch eine Abdichtung wird verhindert, dass Wasser im Bereich der Kameradurchführung in den Rumpf einströmt. Weiterhin kann die transparente Scheibe oder das Scheibengehäuse durch die Abdichtung fest mit dem Rumpf verbunden und dadurch eine erhöhte Stabilität der Kamerahalterung erreicht werden. Ist die transparente Scheibe oder das Scheibengehäuse nicht wasserdicht mit der Kameradurchführung verbunden, so ergibt sich ein einfach zu montierender Aufbau. Eine solche Anordnung ist insbesondere dann sinnvoll, wenn die Frontkamera in einer wasserdichten Kameraeinhausung eingehaust und die Frontkamera-Aufnahme, in der die Kameraeinhausung angeordnet ist, mit einem Flutungsraum der Schwimm-und Tauchhilfe verbunden ist. Das zwischen der transparenten Scheibe bzw. dem Scheibengehäuse und dem Rand der Kameradurchführung in den Rumpf einfließende Wasser gelangt so in den ohnehin mit Wasser gefüllten Flutungsraum. Vorteilhaft lässt sich eine nicht abgedichtet eingebaute, transparente Scheibe oder ein nicht abgedichtet eingebautes, transparentes Scheibengehäuse im Servicefall einfach demontieren bzw. austauschen.

Eine einfache Ausrichtung der transparenten Scheibe oder des Scheibengehäuses in Umfangsrichtung gegenüber dem Rumpf kann dadurch erreicht werden, dass die transparente Scheibe und/oder eine Scheibenfassung des Scheibengehäuses, in der die transparente Scheibe gehalten ist, oval ausgeführt ist.

Eine sowohl in Umfangsrichtung als auch in axialer Richtung exakte Ausrichtung des Scheibengehäuses gegenüber der Kameraeinhausung kann dadurch erreicht werden, dass das Scheibengehäuse abgedichtet mit der Kameraeinhausung verbunden ist und dass das Scheibengehäuse und die Kameraeinhausung Arretiermittel aufweisen, welche sowohl in axialer Richtung als auch in Umfangsrichtung eine eindeutige Ausrichtung des Scheibengehäuses gegenüber der Kameraeinhausung vorgeben. Ist zusätzlich, beispielsweise durch die ovale Ausführung der transparenten Scheibe oder der Scheibeneinfassung, die Ausrichtung des Scheibengehäuses in Umfangsrichtung gegenüber dem Rumpf fest vorgegeben, so kann eine exakte Ausrichtung der in der Kameraeinhausung angeordneten Frontkamera bezogen auf den Rumpf der Schwimm- und Tauchhilfe erreicht werden.

Eine kabelgebundene Verbindung zwischen der Frontkamera und der Steuerelektronik kann dadurch gereicht werden, dass die Kameraeinhausung rückseitig von einem wasserdicht auf die Kameraeinhausung aufsteckbaren Gehäuseverschluss abgeschlossen ist und dass ein Datenkabel zur Übertragung der Videodaten an die Steuereinheit wasserdicht durch den Gehäuseverschluss geführt ist.

Entsprechend einer besonders bevorzugten Ausgestaltungsvariante der Erfindung kann es vorgesehen sein, dass der Rumpf im Bereich der Frontkamera-Aufnahme versteift ausgebildet ist. Vibrationen des Rumpfes im Bereich der Frontkamera-Aufnahme und somit der Frontkamera können so vermieden werden.

Die Erfindung wird im Folgenden anhand eines in den Zeichnungen dargestellten Ausführungsbeispiels näher erläutert. Es zeigen:
- Fig. 1: in perspektivischer Seitenansicht von hinten eine Schwimm- und Tauchhilfe,
- Fig. 2: in einer perspektivischen Seitenansicht von vorne die in Figur 1 gezeigte Schwimm- und Tauchhilfe,
- Fig. 3: in perspektivischer Seitenansicht von hinten einen Ausschnitt der in Figur 1 gezeigten Schwimm- und Tauchhilfe im Bereich eines Displays,
- Fig. 4: einen vorderen Bereich der in Figur 1 gezeigten Schwimm- und Tauchhilfe in einer seitlichen Schnittdarstellung,
- Fig. 5: in einer Explosionsdarstellung eine Frontkamera-Baugruppe,
- Fig. 6: einen in Figur 4 gezeigten Ausschnitt der Schwimm- und Tauchhilfe im Bereich der in Figur 5 gezeigten Frontkamera-Baugruppe in einer vergrößerten Schnittdarstellung,
- Fig. 7: einen in Figur 4 gezeigten Ausschnitt im Bereich einer Rückkamera in einer vergrößerten Schnittdarstellung und
- Fig. 8: ein Flussdiagramm zur Steuerung der Kameras.

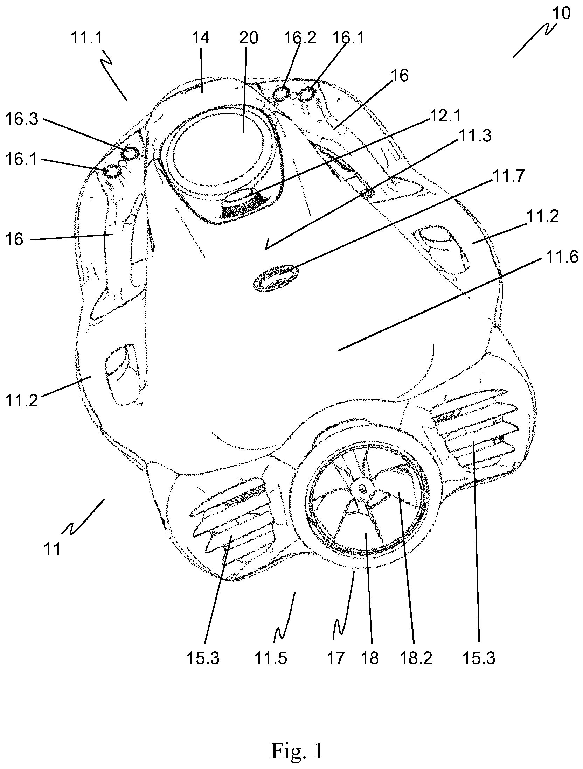

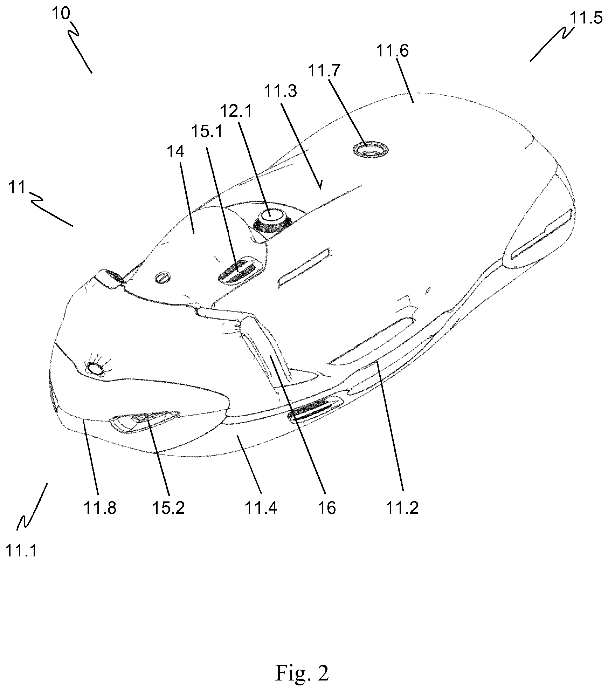

Figur 1 zeigt in perspektivischer Seitenansicht von hinten eine Schwimm- und Tauchhilfe 10. In Figur 2 ist die in Figur 1 gezeigte Schwimm- und Tauchhilfe 10 in einer perspektivischen Seitenansicht von vorne dargestellt.

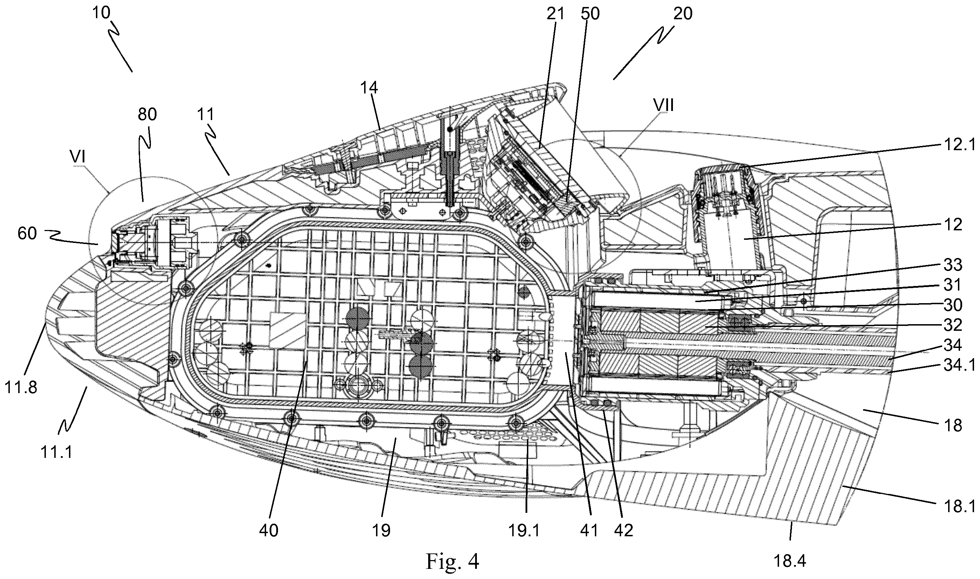

Die Schwimm- und Tauchhilfe 10 weist einen Rumpf 11 auf. Der Rumpf 11 ist aus einem Oberteil 11.6 und einem in Figur 2 gezeigten Unterteil 11.4 zusammengesetzt. Das Oberteil 11.6 ist mit zwei Haltegriffen 16 ausgerüstet, die beidseitig des Rumpfes 11 angeordnet sind. An diesen Haltegriffen 16 kann sich ein Benutzer festhalten und die Schwimm- und Tauchhilfe 10 mit an den Haltegriffen 16 angebrachten Bedienelementen 16.1 steuern. Insbesondere kann hier die Motorleistung der Schwimm- und Tauchhilfe 10 variiert werden. An einem der Haltegriffen 16 ist zusätzlich ein Schaltelement 16.2 und an dem gegenüberliegenden Haltegriffen 16 ein Umschaltelement 16.3 angeordnet. Der Benutzer, der sich an den Haltegriffen 16 festhält, liegt mit seinem Oberkörper auf einer Auflagefläche 11.3 im Bereich hinter einem Display 20 auf dem Oberteil 11.6 auf. In dieser Position kann der Benutzer einfach das Display 20 ablesen und die Bedienelemente 16.1, das Schaltelement 16.2 und das Umschaltelement 16.3 bedienen. An der Auflagefläche 11.3 ist eine Halterung 11.7 zur Befestigung eines Gurtsystems angebracht, mit dem sich der Benutzer an der Schwimm- und Tauchhilfe 10 angurten kann. Vor der Auflagefläche 11.3 ist ein Verschluss 12.1 für eine dahinter liegende, in Figur 4 gezeigte Ladebuchse 12 angeordnet. Über die Ladebuchse 12 können in dem Rumpf 11 enthaltene Akkumulatoren aufgeladen werden.

Seitlich am Rumpf 11 sind Tragegriffe 11.2 angeordnet, an denen die Schwimm- und Tauchhilfe 10 außerhalb des Wassers getragen werden kann.

In Fahrtrichtung vor dem Display 20 und zwischen den beiden Haltegriffen 16 ist eine abnehmbare Abdeckhaube 14 an dem Rumpf 11 befestigt. Seitlich sind, wie in Figur 2 gezeigt, Entlüftungsöffnungen 15.1 in der Abdeckhaube 15 vorgesehen, welche mit einem in dem Rumpf 11 vorgesehenen und in Figur 4 gezeigten Flutungsraum 19 verbunden sind.

Wie Figur 2 zu entnehmen ist, sind im Bereich des Bugs 11.1 Wassereintrittsöffnungen 15.2 vorgesehen, durch welche Wasser in den Flutungsraum 19 einströmen kann. Der Flutungsraum 19 kann dazu über die Entlüftungsöffnungen 15.1 der Abdeckhaube 14 entlüftet werden. Durch den mit Wasser gefüllten Flutungsraum 19 wird der Auftrieb der Schwimm- und Tauchhilfe 10 so eingestellt, dass eine vorgegebene Auftriebskraft erhalten bleibt, so dass sowohl ein Schwimm- wie auch ein Tauchbetrieb möglich ist. An dem in Figur 1 gezeigten Heck 11.5 der Schwimm- und Tauchhilfe 10 sind durch Lamellen abgedeckte Wasseraustrittsöffnungen 15.3 angebracht, die ebenfalls mit dem Flutungsraum 19 in Verbindung stehen. Der Flutungsraum 19 wird, sobald die Schwimm- und Tauchhilfe 10 in das Wasser gesetzt wird, mit Wasser geflutet, das durch die Wassereintrittsöffnungen 15.2 und Wasseraustrittsöffnungen 15.3 eindringt. Sobald die Schwimm- und Tauchhilfe 10 in den Fahrbetrieb übergeht, wird in dem Flutungsraum 19 eine Strömung erzeugt. Dabei tritt das Wasser durch die Wassereintrittsöffnungen 15.2 in den Flutungsraum 19 ein. Es durchströmt den Flutungsraum 19 und umspült dabei in dem Flutungsraum 19 gehaltene elektrische Baueinheiten, wie beispielsweise einen in Figur 4 gezeigten Elektromotor 30 zum Antrieb der Schwimm- und Tauchhilfe 10 oder die zugehörigen Akkumulatoren. Dabei nimmt das Wasser die Verlustleistung der elektrischen Baueinheiten auf und kühlt diese. Nach Durchströmen des Flutungsraums 19 verlässt das Wasser diesen durch die Wasseraustrittsöffnungen 15.3, die symmetrisch beidseitig eines Strahlaustritts 17 eines Strömungskanals 18 angeordnet sind. In dem Strömungskanal 18 ist nicht gezeigt ein Propeller der Schwimm- und Tauchhilfe 10 angeordnet, welcher Wasser an saugt und aus dem Strahlaustritt 17 ausstößt, wodurch die Schwimm- und Tauchhilfe 10 angetrieben wird.

In dem Strömungskanal 18 ist endseitig ein Strömungsstator 18.2 angeordnet, welcher einer Rotation des durch den Strömungskanal 18 strömenden Wassers entgegenwirkt, so dass das Wasser aus dem Strömungskanal 18 möglichst rotationsfrei ausströmt. Die Rotationsenergie des Wassers wird dabei in eine lineare Bewegungsenergie umgewandelt und dient damit dem Antrieb der Schwimm- und Tauchhilfe 10.

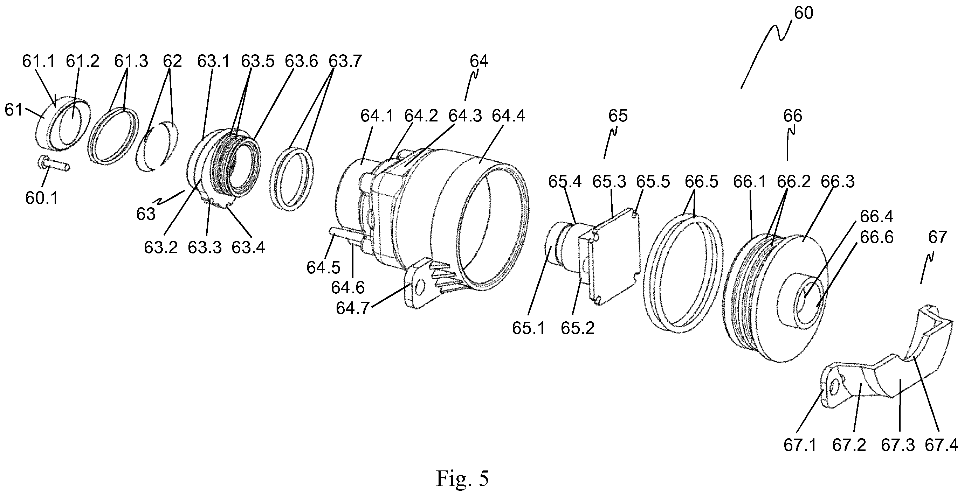

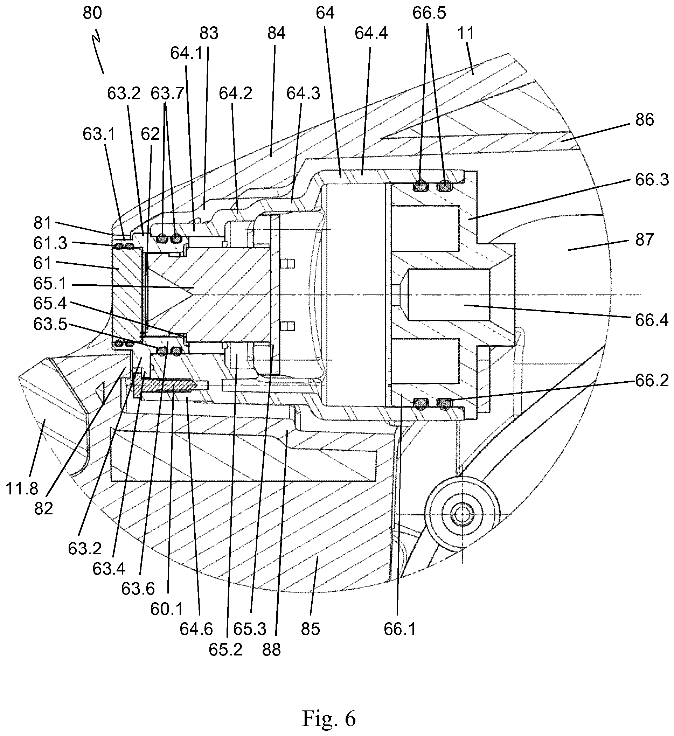

Der Rumpf 11 der Schwimm- und Tauchhilfe 10 ist aus einem Kunststoff oder aus einem Verbundwerkstoff hergestellt. Dadurch weist die Schwimm- und Tauchhilfe 10 ein geringes Gewicht auf, sodass sie außerhalb des Wassers von einer einzelnen Person getragen werden kann. Eine den vorderen Bereich des Bugs 11.1 ausbildende Bugspitze 11.8 ist aus einem elastischen Material, beispielsweise aus Gummi oder Silikon, gefertigt. Dadurch wird die Stoßbelastbarkeit der Schwimm- und Tauchhilfe 10 im Bereich des Bugs 11.1 erhöht. Oberhalb der Bugspitze 11.8 ist eine transparente Scheibe 61 einer in den Figuren 5 und 6 näher gezeigten Frontkamera-Baugruppe 60 in den Rumpf 11 der Schwimm- und Tauchhilfe 10 eingelassen. Die transparente Scheibe 61 ist mittig und in Fahrtrichtung weisend an dem Rumpf 11 befestigt.

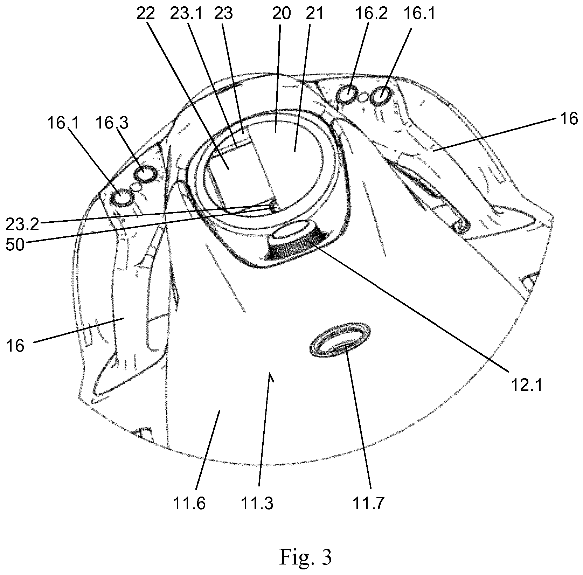

Figur 3 zeigt in perspektivischer Seitenansicht von hinten einen Ausschnitt der in Figur 1 gezeigten Schwimm- und Tauchhilfe 10 im Bereich des Displays 20. Das Display 20 dient unter anderem der Anzeige von Betriebsparametern der Schwimm-und Tauchhilfe 10, beispielsweise der vorliegenden Leistungsstellung einer Antriebseinheit, wie sie vom Fahrer über die Bedienelemente 16.1 eingestellt ist, einer Fahrgeschwindigkeit oder einer Tauchtiefe. Eine transparente Displayabdeckung 21 ist teilgeöffnet dargestellt. Die transparente Displayabdeckung 21 ist vorliegend aus Acrylglas gefertigt. Hinter der transparenten Displayabdeckung 21 ist eine LCD-Anzeige 22 angeordnet. Die LCD-Anzeige 22 ist in eine LCD-Anzeigeaufnahme 23.1 eines Displaygehäuses 23 eingesetzt. Unterhalb der LCD-Anzeige 22 ist eine Rückkamera 50 angeordnet. Die Rückkamera 50 ist in einer Rückkamera-Aufnahme 23.2 des Displaygehäuses 23 gehalten. Die Rückkamera 50 blickt durch die transparente Displayabdeckung 21 in Richtung der Auflagefläche 11.3. In Betrieb erfasst sie demnach insbesondere das Gesicht eines auf der Auflagefläche 11.3 aufliegenden Fahrers der Schwimm- und Tauchhilfe 10.

Figur 4 zeigt einen vorderen Bereich der in Figur 1 gezeigten Schwimm- und Tauchhilfe 10 in einer seitlichen Schnittdarstellung. Für gleiche Bauteile sind dabei die gleichen Bezeichner verwendet.

Innerhalb des Rumpfes 11 ist eine Unterwasser-Antriebs-Einheit angeordnet. Der Unterwasser-Antriebs-Einheit sind in dem vorliegenden Ausführungsbeispiel ein Elektromotor 30, ein Elektronikgehäuse 40, eine vorliegend aus kohlenfaserverstärktem Kunststoff hergestellte Motorwelle 34 mit einem umgebenden Außenrohr 34.1 und ein nicht gezeigten Propeller zugeordnet.

In dem Elektronikgehäuse 40 ist eine nicht gezeigte Motorsteuerung angeordnet und durch das Elektronikgehäuse 40 wasserdicht eingehaust. Das Elektronikgehäuse 40 ist durch zwei Gehäusehälften gebildet und kann durch Entnahme einer Gehäusehälfte geöffnet werden. In der gewählten Schnittzeichnung ist lediglich eine Gehäusehälfte dargestellt. Eine nicht dargestellte zweite Gehäusehälfte liegt wasserdicht mit einer umlaufenden zweiten Schließfläche auf einer Schließfläche der ersten Gehäusehälfte auf. Dazu ist zwischen den beiden Schließflächen eine nicht dargestellte Dichtung vorgesehen. Das Elektronikgehäuse 40 ist über einen Öffnungsabschnitt 41 mit dem Elektromotor 30 mechanisch verbunden. Dazu ist ein an den Öffnungsabschnitt 41 anschließender Abdichtabschnitt 41.1 endseitig auf ein Motorgehäuse 33 des Elektromotors 40 aufgesteckt. Der zwischen dem Abdichtabschnitt 41.1 und dem Motorgehäuse 33 ausgebildeter Spalt ist mittels Dichtelementen 42 abgedichteten. Dadurch ist das Elektronikgehäuse 40 wasserdicht mit dem Motorgehäuse 33 des Elektromotors 30 verbunden. Durch den Öffnungsabschnitt 41 können elektrische Verbindungen zwischen der Motorsteuerung und dem Elektromotor 30 verlegt werden.

Das Elektronikgehäuse 40 ist mit Hilfe von Befestigungselementen in dem Flutungsraum 19 gehalten. Der Flutungsraum 19 weist Flutungsöffnungen 19.1 auf, durch die Wasser in den Flutungsraum 19 einfließen kann. Auch der Elektromotor 30 ist innerhalb des Flutungsraums 19 angeordnet. Der Elektromotor 30 ist an dem Rumpf 11 befestigt.

Die Motorwelle 50 ist innerhalb des Außenrohres 34.1 von dem Elektromotor 30 in den Strömungskanal 18 der Schwimm- und Tauchhilfe 10 geführt. Der Strömungskanal 18 erstreckt sich von einer Einströmöffnung 18.4 an der Unterseite der Schwimm- und Tauchhilfe 10 bis zum Strahlaustritt 17 an deren Heck 11.5, wie in Figur 2 gezeigt ist. Er kann einstückig in dem Rumpf 11 ausgeformt sein. Im vorliegenden Ausführungsbeispiel wir der Strömungskanal 18 von einer Oberschale und einer Unterschale gebildet, die mittels geeigneter Befestigungsmittel miteinander verbunden sind. Im Bereich der Einströmöffnung 18.4 ist ein Leitelement 18.1 vorgesehen, an dem das Wasser vorbeiströmt und das eine untere Auflage der Schwimm- und Tauchhilfe 10 bildet.

Durch den abgedichteten, steckbaren Verbund des Elektronikgehäuses 40 mit dem Motorgehäuse 33, dem abgedichteten Anschluss des Außenrohres 34.1 an dem Motorgehäuse 30 sowie einer nicht gezeigten propellerseitigen Abdichtung zwischen dem Außenrohr 34.1 und der Motorwelle 40 ist eine vollständig eingekapselte Unterwasser-Antriebs-Einheit ausgebildet. Diese kann in mit Wasser flutbare Bereiche innerhalb des Rumpfes 10 der Schwimm- und Tauchhilfe 10 angeordnet werden. Im vorliegenden Ausführungsbeispiel sind der Elektromotor 30 und die in dem Elektronikgehäuse 40 angeordnete Motorsteuerung in dem Flutungsraum 19 angeordnet, während das Außenrohr 34.4 mit der Motorwelle 34 in dem Strömungskanal 18 angeordnet ist. Der Flutungsraum 19 wird beim Eintauchen der Schwimm- und Tauchhilfe 10 durch die Flutungsöffnungen 19.1 und die Wassereintritts- und -austrittsöffnungen 15.2, 15.3 mit Wasser geflutet, wobei die verdrängte Luft über die Entlüftungsöffnungen 15.1 entweicht, wie diese in Figur 2 gezeigt sind. Bewegt sich die Schwimm- und Tauchhilfe 10 durch das Wasser, entsteht eine Strömung innerhalb des Flutungsraums 19, wobei das Wasser in die am Bug 11.1 befindlichen Wassereintrittsöffnungen 15.2 einströmt und durch die am Heck 11.5 angeordneten Wasseraustrittsöffnungen 15.3 wieder ausströmt. Der Elektromotor 30 und Motorsteuerung sind so durch das vorbeiströmende Wasser effizient gekühlt. Verlustwärme kann schnell abgeführt werden, so dass ein Elektromotor 30 und eine zugehörige Motorsteuerung mit einer sehr hohen Leistung installiert werden können.

Der Elektromotor 30 treibt über die Motorwelle 34 den Propeller an. Dieser erzeugt einen Wasserstrom innerhalb des Strömungskanals 18 von der Einströmöffnung 18.4 zu dem Strahlaustritt 17, wodurch die Schwimm- und Tauchhilfe 10 angetrieben wird. Ein Rotor 32 des Elektromotors 30 ist auf einen Rotorabschnitt der Motorwelle 34 aufgesteckt und mit diesem verklebt. Umlaufend zu dem Rotor 32 ist ein Stator 31 des Elektromotors 30 vorgesehen. Der Stator 31 ist mit einer Vergussmasse in dem Motorgehäuse 33 eingegossen und so thermisch mit dem Motorgehäuse 33 gekoppelt. Die Verlustwärme des Elektromotors 30 kann dadurch gut an das Motorgehäuse 33 und von dort an das vorbeiströmende Wasser abgegeben werden.

Im Bereich des Bugs 11.1 der Schwimm-und Tauchhilfe 10 ist in einem Frontkamera-Aufnahmebereich 80 die Frontkamera-Baugruppe 60 angeordnet, wie dies für den mit VI gekennzeichneten Bereich vergrößert in Figur 6 gezeigt ist.

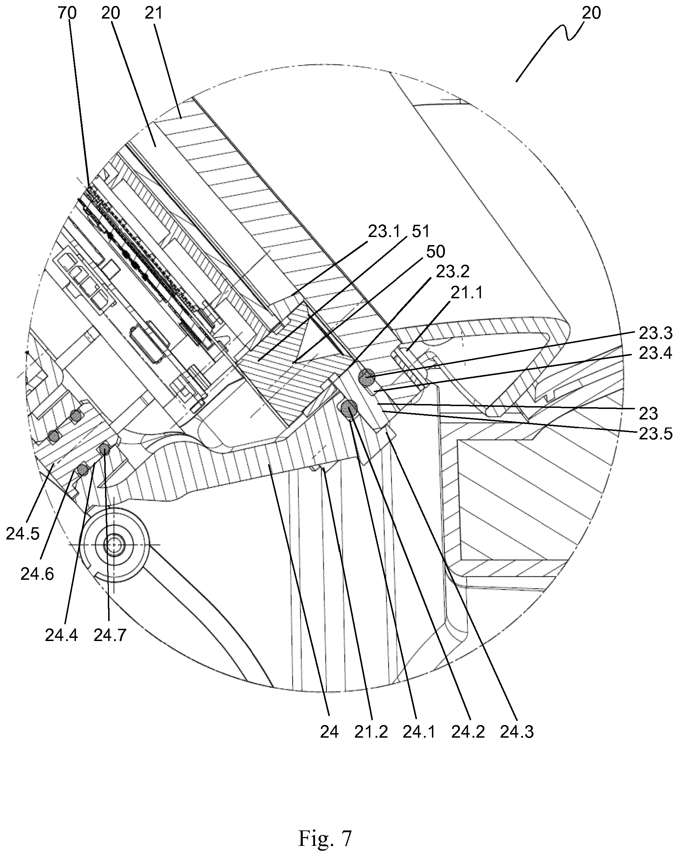

Ein mit VII gekennzeichneten Bereich um die Rückkamera 50 ist vergrößert in Figur 7 dargestellt.

Figur 5 zeigt in einer Explosionsdarstellung die Frontkamera-Baugruppe 60.

Die transparente Scheibe 61 weist eine ovale äußere Mantelfläche 61.1 auf. Ihr sind zwei Scheiben-Dichtelemente 61.3 zugeordnet. Weiterhin sind der ovalen transparenten Scheibe 61.2 zwei sichelförmige Blendenelemente zugewiesen. Diese sind derart geformt, dass sie mit ihrer äußeren Kontur der Außenkontur der transparenten Scheibe 61.2 folgen und in der Mitte der transparenten Scheibe 61.2 einen kreisrunden Durchsichtbereich 61.2 freilassen.

Zu der transparenten Scheibe 61 hin ausgerichtet ist ein Scheibengehäuse 63 angeordnet. Das Scheibengehäuse 63 weist eine Scheibenfassung 63.1, einen nachfolgenden Arretierabschnitt 63.2 und einen abschließenden, zylinderförmigen Ansatz 63.6 auf. Die Scheibenfassung 63.1 umfasst einen ovalen Durchbruch, in den die transparente Scheibe 61, abgedichtet durch die Scheiben-Dichtelemente 61.3, eingesetzt werden kann. Alternativ oder zusätzlich ist es denkbar, dass die transparente Scheibe 61 entlang ihrer Mantelfläche 61.1 in den ovalen Durchbruch der Scheibenfassung 63.1 eingeklebt wird. Die Scheibenfassung 63.1 ist derart ausgebildet, dass die Blendenelemente 62 bei montierter Frontkamera-Baugruppe 60 an der transparenten Scheibe 61 anliegend in Position gehalten werden.

Der Frontkamera-Baugruppe 60 ist weiterhin eine Kameraeinhausung 64 zugeordnet. Die Kameraeinhausung 64 weist einen zylinderförmigen ersten Gehäuseabschnitt 64.1 auf, welcher dem Ansatz 63.6 des Scheibengehäuses 63 zugewandt ist. An den ersten Gehäuseabschnitt 64.1 schließt ein in seinem äußeren Durchmesser gegenüber dem ersten Gehäuseabschnitt 64.1 aufgeweiteter zweiter Gehäuseabschnitt 64.2 an. Dem zweiten Gehäuseabschnitt 64.2 folgt ein dritter Gehäuseabschnitt 64.3 mit einer vorliegend im Wesentlichen rechteckigen Außen- und Innenkontur. An den dritten Gehäuseabschnitt 64.3 ist ein zylindrischer vierter Gehäuseabschnitt 64.4 angeformt. Dieser weist einen gegenüber dem zweiten Gehäuseabschnitt 64.2 nochmals vergrößerten Außendurchmesser auf. Seitlich zu dem ersten Gehäuseabschnitt 64.1 sind winkelversetzt zwei Arretierbolzen 64.5 in Richtung zum Scheibengehäuse 63 weisend angeordnet. Dabei ist in der gewählten Ansicht lediglich einer der Arretierbolzen 64.5 zu sehen, während der andere Arretierbolzen 64.5 von dem ersten Gehäuseabschnitt 64.1 verdeckt angeordnet ist. Weiterhin ist ein Schraubansatz 64.6 seitlich des ersten Gehäuseabschnitts 64.1 in Richtung zum Scheibengehäuse 63 weisend angeordnet. Der Schraubenansatz 64.6 ist vorliegend auf halbem zwischen den beiden Arretierbolzen 64.5 ausgebildetem und auf die Mittenachse der Kameraeinhausung 64 bezogenem Winkel angeordnet. Der Schraubenansatz 64.6 und die Arretierbolzen 64.5 sind endseitig an den zweiten Gehäuseabschnitt 64.2 und seitlich an den ersten Gehäuseabschnitt 64.1 angeformt. Zum Scheibengehäuse 63 hin weisend stehen der Schraubenansatz 64.6 und die Arretierbolzen 64.5 über den stirnseitigen Abschluss des ersten Gehäuseabschnitts 64.1 der Kameraeinhausung 64 über.

Der erste Gehäuseabschnitt 64.1 weist entlang seiner Mittellängsachse einen zylinderförmigen Durchbruch auf, in den der Ansatz 63.6 des Scheibengehäuses 63 eingeschoben werden kann. Um eine wasserdichte Verbindung zwischen der Kameraeinhausung 64 und dem Scheibengehäuse 63 zu ermöglichen sind in den Ansatz 63.6 des Scheibengehäuses 63 umlaufende zwei Dichtringnuten 63.5 eingearbeitet. In diese Dichtringnuten 63.5 können jeweils ein Scheibengehäuse-Dichtelement 63.7 eingesetzt werden. Montiert liegen die Scheibengehäuse-Dichtelemente 63.7 zwischen den Dichtringnuten 63.5 des Ansatzes 63.6 und der Innenfläche des ersten Gehäuseabschnitts 64.1 und dichten dadurch den Übergangsspalt ab.

Der Arretierabschnitt 63.2 ist exzentrisch zu dem Ansatz 63.6 ausgebildet. Dabei steht er umlaufend radial über den Ansatz 63.6 über. Der Arretierabschnitt 63.2 bildet so einen Anschlag gegenüber dem ersten Gehäuseabschnitt 64.1 der Kameraeinhausung 64 aus. Er begrenzt somit, wie weit das Scheibengehäuse 63 in den ersten Gehäuseabschnitt 64.1 eingeschoben wird. Den Arretierbolzen 64.5 zugewandt weist der Arretierabschnitt 63.2 Raststufen 63.3 auf. Beim Einschieben des Ansatzes 63.6 in den ersten Gehäuseabschnitt 64.1 der Kameraeinhausung 64 greifen die Arretierbolzen 64.5 in die Raststufen 63.3 des Arretierabschnitts 63.2 ein. Dadurch ist das Scheibengehäuse 63 auch in Umfangsrichtung exakt gegenüber der Kameraeinhausung 64 ausgerichtet. Der Schraubansatz 64.6 der Kameraeinhausung 64 ist auf eine Schraubendurchführung 63.4 am äußeren Rand des Arretierabschnitts 63.2 ausgerichtet. Bei montierter Frontkamera-Baugruppe 60 kann eine Fixierschraube 60.1 durch die Schraubendurchführung 63.4 geführt und in den Schraubenansatz 64.6 eingeschraubt werden, bis ihr Schraubenkopf an dem Arretierabschnitt 63.2 anliegt. Dadurch ist das Scheibengehäuse 63 axial gegenüber der Kameraeinhausung 64 gehalten.

An dem vierten Gehäuseabschnitt 64.4 der Kameraeinhausung 64 sind gegenüberliegend und seitlich abstehend zwei Kameragehäuse-Flansche 64.7 angeformt. Die Kameragehäuse-Flansche 64.7 weisen jeweils eine Bohrung auf. Sie dienen der Befestigung der Frontkamera-Baugruppe 60 an dem Rumpf 11 der Schwimm-und Tauchhilfe 10, wobei entsprechend Schrauben durch die Bohrungen zu führen und mit dem Rumpf 11 zu verschrauben sind.

Gegenüberliegend zu dem vierten Gehäuseabschnitt 64.4 der Kameraeinhausung 64 ist eine Frontkamera 65 angeordnet. Der Frontkamera 65 mit ihrem Kameraobjektiv 65.1 und ihrem Kameragehäuse 65.2 ist eine Kameraplatine 65.3 zugeordnet. Das Kameraobjektiv 65.1 vergrößert zum Kameragehäuse 65.2 hin seinen Durchmesser in Form einer Stufe 65.4. In den Ecken der Kameraplatine 65.3 sind Schraubdurchführungen 65.5 zur Befestigung der Frontkamera 65 in der Kameraeinhausung 64 vorgesehen.

Beabstandet zu der Frontkamera 65 ist ein Gehäuseverschluss 66 angeordnet. Der Gehäuseverschluss 66 weist einen Dichtabschnitt 66.1 in Form eines Hohlzylinders auf, in den zwei umlaufende, nutenförmige Dichtringaufnahmen 66.2 eingeformt sind. Auf seiner der Kameraeinhausung 64 abgewandten Seite ist der Gehäuseverschluss 66 durch einen kreisförmigen Verschlussdeckel 66.3 abgeschlossen. Der Verschlussdeckel 66.3 weist einen größeren Durchmesser auf als der Dichtabschnitt 66.1. Entlang seiner Mittelachse ist ein Kabeldurchbruch 66.4 in den Verschlussdeckel 66.3 eingeformt. Der Kabeldurchbruch 66.4 ist umlaufend von einem ringförmigen Steg 66.6 eingefasst.

Zwischen dem Gehäuseverschluss 66 und der Frontkamera 65 sind zwei Gehäuse-Dichtringe 66.5 dargestellt. Die Gehäuse-Dichtringe 66.5 können in die Dichtringaufnahmen 66.2 des Gehäuseverschlusses 66 eingelegt werden. Anschließend kann der Gehäuseverschluss 66, nachdem die Frontkamera 65 in der Kameraeinhausung 64 montiert wurde, mit seinem Abdichtabschnitt 66.1 in den vierten Gehäuseabschnitt 64.4 der Kameraeinhausung 64 eingeschoben werden, bis er mit seinem Verschlussdeckel 66.3 an der Kameraeinhausung 64 anliegt. Anschlusskabel der Frontkamera 65 können durch den Kabeldurchbruch 66.4 aus der Kameraeinhausung 64 geführt werden.

Abschließend ist eine Halteklammer 67 der Frontkamera-Baugruppe 60 gezeigt. Die Halteklammer 67 weist seitlich gegenüberliegend angeordnete Klammerflansche 67.1 auf, die mittels aufstrebender Klammerstege 67.2 mit einem Haltebereich 67.3 verbunden sind. In den Haltebereich 67.3 ist eine Gehäuseverschluss-Auflage 67.4 eingeformt. Bei in die Kameraeinhausung 64 eingeschobenem Gehäuseverschluss 66 kann die Halteklammer 67 derart mit ihrem Haltebereich 67.3 an den Verschlussdeckel 66.3 des Gehäuseverschlusses 66 angedrückt werden, dass die Klammerflansche 67.1 an den Kameragehäuse-Flanschen 64.7 der Kameraeinhausung 64 anliegen. Wie bereits zur Montage der Kameraeinhausung 64 beschrieben, kann dann jeweils eine Befestigungsschraube durch die in die Klammerflansche 67.1 und die Kameragehäuse-Flansche 64.7 eingebrachten und zueinander fluchtenden Bohrungen geführt und mit dem Rumpf 11 der Schwimm-und Tauchhilfe 10 verschraubt werden. Dadurch ist die Frontkamera-Baugruppe 60 fest mit dem Rumpf 11 verbunden, wobei durch den Haltebereich 67.3 der Halteklammer 67 der Gehäuseverschluss 66 axial gehalten ist. Durch die Halteklammer 67 ist somit vermieden, dass sich der Gehäuseverschluss 66 unbeabsichtigt öffnet. Montiert ist der ringförmige Steg 66.6 durch die Gehäuseverschluss-Auflage 67.4 der Halteklammer 67 geführt.

Figur 6 zeigt einen in Figur 4 gezeigten Ausschnitt der Schwimm- und Tauchhilfe 10 im Bereich der in Figur 5 gezeigten Frontkamera-Baugruppe 60 in einer vergrößerten Schnittdarstellung. Der dargestellte Bereich ist dabei in Figur 4 durch einen mit VI gekennzeichneten Abschnitt markiert.

Die in Figur 5 in einer Explosionsdarstellung gezeigte Frontkamera-Baugruppe 60 ist in Figur 6 montiert dargestellt. Dabei ist die ovale transparente Scheibe 61 in die Scheibeneinfassung 63.1 des Scheibengehäuses 63 eingesetzt. Die transparente Scheibe 61 ist mittels der Scheiben-Dichtelemente 61.3 gegenüber dem Scheibengehäuse 63 abgedichtet. Wie bereits erwähnt, kann die transparente Scheibe 61 auch mit dem Scheibengehäuse 64 zusätzlich oder alternativ zu den Scheiben-Dichtelementen 61.3 verklebt sein. Auf den Ansatz 63.6 des Scheibengehäuses 63 ist der erste Gehäuseabschnitt 64.1 der Kameraeinhausung 64 derart aufgeschoben, dass er mit seiner Stirnseite an dem Arretierabschnitt 63.2 des Scheibengehäuses 63 anliegt. Der Übergang von dem Ansatz 63.6 zu dem ersten Gehäuseabschnitt 64.1 ist durch die Scheibengehäuse-Dichtelemente 63.7, welche in die Dichtringnuten 63.5 des Ansatzes 63.6 eingelegt sind, abgedichtet. Die Fixierschraube 60.1 ist durch die Schraubendurchführung 63.4 des Arretierabschnitt 63.2 des Scheibengehäuses 63 zu dem Schraubenansatz 64.6 der Kameraeinhausung 64 geführt und in diese eingeschraubt. Dadurch liegt der Schraubenkopf der Fixierschraube 60.1 mit einem Abschnitt an dem Arretierabschnitt 63.2 an, sodass das Scheibengehäuse 63 axial gegenüber der Kameraeinhausung 64 gehalten ist. In Umfangsrichtung ist das Scheibengehäuse 63 durch den Eingriff der in Figur 5 gezeigten Arretierbolzen 64.5 in die Raststufen 63.3 des Arretierabschnitts 63.2 exakt gegenüber der Kameraeinhausung 64 ausgerichtet. Es ergibt sich somit sowohl axial als auch in Umfangsrichtung eine exakte Ausrichtung der in der Kameraeinhausung 64 montierten Frontkamera 65 gegenüber dem Scheibengehäuse 63 und damit der oval ausgeführten transparenten Scheibe 61.

Die Frontkamera 65 ist soweit in die Kameraeinhausung 64 eingeführt, dass der vordere Abschluss ihres Kameraobjektivs 65.1 mit dem äußeren Ende des ersten Gehäuseabschnitts 64.1 abschließt. Damit endet das Kameraobjektiv 65.1 unmittelbar vor den Blendenelementen 62. Das Kameraobjektiv 65.1 liegt mit seiner Stufe 65.4 an einer entsprechend ausgebildeten Innenstufe, welche umlaufend am stirnseitigen äußeren Abschluss des Ansatzes 63.6 des Scheibengehäuses 63 angebracht ist, an. Dadurch ist die Frontkamera 65 in axialer Richtung exakt positioniert. Das Kameragehäuse 65.2 ist in dem stufenförmig gegenüber dem ersten Gehäuseabschnitt 64.1 aufgeweiteten zweiten Gehäuseabschnitt 64.2 angeordnet, während die rechtwinklige Kameraplatine 65.3 in den entsprechend rechtwinklig ausgebildeten dritten Gehäuseabschnitt 64.3 eingebracht ist. Endseitig ist die Kameraeinhausung 64 durch den Gehäuseverschluss 66 verschlossen. Dieser ist mit seinem Dichtabschnitt 66.1 bis zum Anschlag des Verschlussdeckels 66.3 in den vierten Gehäuseabschnitt 64.4 der Kameraeinhausung 64 eingeschoben. Nicht dargestellt ist ein Datenkabel, vorliegend ein USB-Kabel, durch den Kabeldurchbruch 66.4 des Verschlussdeckels 66.3 geführt. Die Frontkamera 65 kann so mit einer in Figur 7 gezeigten Steuerelektronik 70 verbunden werden.

Die Frontkamera-Baugruppe 60 ist in einer Frontkamera-Aufnahme 83 des Rumpfes 11 festgelegt. Dazu ist die Frontkamera-Aufnahme 83 im Innenbereich in den Rumpf 11 eingeformt. Zur Bugspitze 11.8 hin weisend ist die Frontkamera-Aufnahme 83 durch eine Kameradurchführung 81 in der Außenhaut des Rumpfes 11 geöffnet. Die Kamera Durchführung 81 weist eine ovale Form auf und die ovale Scheibeneinfassung 63.1 des Scheibengehäuses 63 ist in die Kameradurchführung 81 eingeschoben. Umlaufend zur Kameradurchführung 81 bildet der Rumpf 11 einen Kameraanschlag 82 aus, an dem das Scheibengehäuse 63 mit seinem Arretierabschnitt 63.2 anliegt. Dabei liegt auch die Fixierschraube 60.1 mit ihrem Schraubenkopf an dem Kameraanschlag 82 an. Dadurch wird vermieden, dass sich die Fixierschraube 60.1 versehentlich löst. Durch den Anschlag des Arretierabschnitts 63.2 an dem Kameraanschlag 82 umlaufend der Kameradurchführung 81 ist die axiale Position der Frontkamera-Baugruppe 60 exakt festgelegt. Durch die ovale Formgebung der transparenten Scheibe 61 und der Scheibenfassung 63.1 des Scheibengehäuses 63 sind diese in Umfangsrichtung eindeutig gegenüber der ebenfalls oval ausgeführten Kameradurchführung 81 des Rumpfes 11 ausgerichtet. Durch die beschriebene Wirkverbindung zwischen den Arretierbolzen 64.5 der Kameraeinhausung 64 und der Raststufen 63.3 des Scheibengehäuses 63 ist die Kameraeinhausung 64 und damit die darin eingebaute Frontkamera 65 in Umfangsrichtung exakt gegenüber dem Scheibengehäuse 63 und damit dem Rumpf 11 der Schwimm- und Tauchhilfe 10 ausgerichtet.

Durch die wasserdichte Ausführung der Frontkamera-Baugruppe 60 ist eine Abdichtung zwischen dem Scheibengehäuse 63 und dem Rumpf 11 im Bereich der Kameradurchführung 81 nicht erforderlich. Wie deutlicher aus Figur 4 zu entnehmen, steht der Innenraum des Frontkamera-Aufnahmebereichs und damit die Frontkamera-Aufnahme 83 in räumlicher Verbindung zu dem Flutungsraum 19. Seitlich an dem Scheibengehäuse 63 vorbei einfließendes Wasser gelangt somit in den im Fahrbetrieb ohnehin von Wasser durchströmten Flutungsraum 19. Es ist jedoch auch denkbar, den zwischen dem Scheibengehäuse 63 und dem Rumpf 11 im Bereich der Kameradurchführung 81 gebildeten Spalt mittels eines Klebstoffes, eines Dichtstoffes oder eines Dichtelements abzudichten. Über den Flutungsraum 19 ist ein Frontkamera-Zugangsbereich 87 zu der Frontkamera-Baugruppe 60 gebildet. Dadurch ist ein Zugang, beispielsweise zur Wartung oder Reparatur der Frontkamera 65, ermöglicht.

Wie bereits zu Figur 5 beschrieben und in der gewählten Schnittdarstellung in Figur 6 nicht zu erkennen, ist die Frontkamera-Baugruppe 60 mittels Schrauben, welche durch die Bohrungen der Kameragehäuse-Flansche 64.7 und Klammerflansche 67.1 geführt sind, mit dem Rumpf 11 verbunden.

Der Frontkamera-Baugruppe 60 zugewandt weist der Rumpf 11 einen nach innen gestufte Rumpfabschnitt 84 auf. Dieser folgt in seiner Kontur der äußeren Form der Frontkamera-Baugruppe 60 und/oder der gestuften Abfolge der Gehäuseabschnitte 64.1, 64.2, 64.3, 64.4 der Kameraeinhausung 64. Der Rumpf 11 ist weiterhin im Frontkamera-Aufnahmebereich 80 versteift ausgeführt. So sind vorliegend ein vertikal angeordneter Versteifungssteg 85 sowie eine horizontal angeordnete Versteifungsstrebe 86 in den Frontkamera-Aufnahmebereich 80 geführt. Der Versteifungssteg trägt eine Einfassung 88, welche die Frontkamera-Baugruppe 60 zumindest teilweise umfänglich einfasst. Durch diese Versteifungsmaßnahmen wird verhindert, dass sich der Rumpf im Frontkamera-Aufnahmebereich 80 auch bei starker mechanischer Belastung des Rumpfes 11, beispielsweise im Schwimmbetrieb bei hohen Geschwindigkeiten, verformt oder dass er vibriert. Dadurch wird ein verwackeln der Videoaufnahmen der Frontkamera 65, wie sie durch hochfrequente Vibrationen eines nicht ausreichend verstärkten Rumpfes 11 hervorgerufen werden können, vermieden.

Figur 7 zeigt einen in Figur 4 gezeigten und dort mit VII gekennzeichneten Ausschnitt im Bereich der Rückkamera 50 in einer vergrößerten Schnittdarstellung. Die Rückkamera 50 ist dabei in einem in Richtung zu der Auflagefläche 11.3 der Schwimm- und Tauchhilfe 10 und damit zu einem aufliegenden Fahrer hin ausgerichteten Display 20 angeordnet.

Das Display 20 ist von einer transparenten Displayabdeckung 21 abgedeckt. Am äußeren Umfang der Displayabdeckung 21 liegt das Displaygehäuse 23 mit einem Displaygehäuse-Rahmen 23.5 an der Displayabdeckung 21 an. Um das Eindringen von Wasser zu vermeiden ist in die Anlagefläche des Displaygehäuse-Rahmens 23.5 an die Displayabdeckung 21 eine Nut 23.4 eingeformt, in die ein erstes Dichtelement 23.3 eingelegt ist. In den Displaygehäuse-Rahmen 23.5 ist die Rückkamera-Aufnahme 23.2 eingeformt. Die Rückkamera 50 ist mit ihrem Rückkamera-Gehäuse 51 in die Rückkamera-Aufnahme 23.2 eingesetzt. Die LCD-Anzeige 22 ist seitlich beabstandet zur Rückkamera 50 in die LCD-Anzeigeaufnahme 23.1 des Displaygehäuses 23 eingesetzt und darin gehalten. An das Displaygehäuse 23 ist ein HMI-Gehäuse 24 (HMI: Human Machine Interface) angeflanscht. Das HMI-Gehäuse 24 liegt mit seinem Rand an dem Displaygehäuse-Rahmen 23.5 des Displaygehäuses 23 an. Zur exakten Positionierung ist umlaufend ein HMI-Gehäusesteg 24.3 an den Rand des HMI-Gehäuses 24 angeformt, welcher den Displaygehäuse-Rahmen 23.5 außenseitig umfasst. In die Anlagefläche des HMI-Gehäuses 24 an das Displaygehäuse 23 ist eine HMI-Gehäusenut 24.1 eingeformt. In diese ist ein zweites Dichtelement 24.2 eingesetzt, wodurch das HMI-Gehäuse 24 gegenüber dem Displaygehäuse 23 abgedichtet ist. Durch die Displayabdeckung 21, den Displaygehäuse-Rahmen 23.5 und den Rand des HMI-Gehäuses 24 sind Schrauben 21.1 geführt und rückseitig in jeweils eine Mutter 21.2 eingeschraubt. Dadurch sind die Displayabdeckung 21, das Displaygehäuse 23 und das HMI-Gehäuse 24 miteinander verbunden.

In dem HMI-Gehäuse 24 ist die Steuerelektronik 70 eingesetzt und fixiert. Rückseitig weist das HMI-Gehäuse 64 eine Kabeldurchführung 24.4 in Form eines Durchbruchs auf. In die Kabeldurchführung 24.4 ist ein Stopfen 24.5 eingesetzt. Der Stopfen 24.5 weist axial beabstandet zwei Stopfen-Nuten 24.6 auf. In die Stopfen-Nuten 24.6 sind Dichtringe 24.7 eingelegt, wodurch der Stopfen 24.5 gegenüber dem HMI-Gehäuse 24 abgedichtet ist. Der Stopfen 24.5 weist eine zentrale Bohrung zur abgedichteten Durchführung eines Kabels auf. Durch diese kann das Datenkabel der Frontkamera 65 in das HMI-Gehäuse 24 eingeführt werden.

Die Frontkamera 65 und die Rückkamera 50 sind jeweils über Datenkabel mit der Steuerelektronik 70 verbunden. Dabei ist vorliegend die Frontkamera über eine USB 2.0 Schnittstelle und die Rückkamera 50 über eine MIPI-Schnittstelle an die Steuerelektronik 70 angeschlossen. Die Steuerelektronik 70 ist über ein Bussystem mit der in dem Elektronikgehäuse 40 angeordneten Motorsteuerung verbunden. Weiterhin ist die LCD-Anzeige 22 an die Steuerelektronik 70 angeschlossen. Die an den Haltegriffen 16 angeordneten Bedienelemente 16.1, das Schaltelement 16.2 und das Umschaltelement 16.3 sind mit der Motorsteuerung verbunden. Dabei dienen die Bedienelemente 16.1 der Steuerung der Wasser-Beschleunigungseinrichtung der Schwimm- und Tauchhilfe 10 und dabei insbesondere der Leistungssteuerung des Elektromotors 30. Durch das Schaltelement 16.2 und das Umschaltelement 16.3 können zumindest in eine Teilfunktion die Kameras 50, 65 gesteuert werden. Dazu fragt die Steuerelektronik 70 in kurzen Zyklen den jeweiligen Schaltzustand des Schaltelements 16.2 und des Umschaltelements 16.3 von der Motorsteuerung ab. Je nach Betätigung des Schaltelements 16.2 und des Umschaltelements 16.3 kann so das Videobild der Frontkamera 65 oder der Rückkamera 50 auf dem Display 20 angezeigt werden. Weiterhin können Videoaufnahmen von einem mit der Steuerelektronik 70 verbundenen Speicher aufgezeichnet werden. Als Speicher ist vorliegend eine SD-Speicherkarte vorgesehen. Die Steuerelektronik 70 weist weiterhin eine Wi-Fi-Schnittstelle auf. Über diese können Videodaten auf einen externen Datenträger, beispielsweise ein Smartphone oder ein Computer, übertragen werden. Weiterhin ist die Wi-Fi-Schnittstelle dazu ausgelegt, Software-Updates für sämtliche Hardwarekomponenten der Schwimm - und Tauchhilfe, beispielsweise die Ansteuerung der Kameras und/oder für die Ansteuerung des Displays und/oder für die Motorsteuerung und /oder für das Akkumanagement (Akkusteuerung) zu empfangen. Software-Updates der Motorsteuerung werden dann von der Steuerelektronik 70 über den Datenbus, vorliegend einem CAN-Datenbus, an die Motorsteuerung weitergeleitet. Weiterhin denkbar ist es, über die Wi-Fi-Schnittstelle Diagnosedaten der Schwimm- und Tauchhilfe 10 an externe Geräte zu versenden. Solche Diagnosedaten können beispielsweise den Zustand der Akkumulatoren oder Fehler im Antriebssystem betreffen. Es ist weiterhin denkbar, anstelle der Wi-Fi-Schnittstelle/W-Lan-Schnittstelle oder eine Bluetooth-Schnittstelle vorzusehen. Durch die digitale Verbindung der Motorsteuerung mit der Steuerelektronik 70 ist es möglich, aktuelle Betriebsparameter der Schwimm- und Tauchhilfe 10 auf dem Display 20 anzuzeigen.

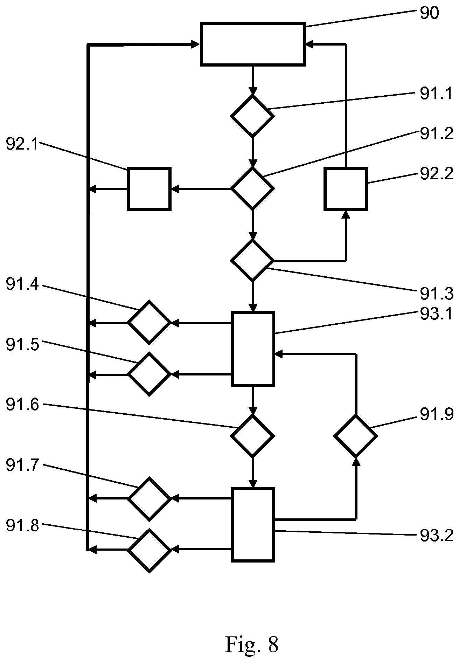

Figur 8 zeigt ein Flussdiagramm zur Steuerung der Kameras 50, 65. Beginnend von einem Hauptmenü 90 wird in einer Abfrage SE 91.1 abgefragt, ob das Schaltelement 16.2 betätigt wurde. Ist dies der Fall, so wird in der nachfolgenden Abfrage Leistungsstellung 91.2 die aktuelle Leistungsstellung der Motorsteuerung für den Elektromotor 30 abgefragt. Ist eine Leistungsstellung von 0 eingestellt, liegt also keine Spannung an dem Elektromotor 30 an, so erfolgt in einer ersten Nachrichtausgabe 92.1 der Hinweis auf dem Display 20, eine Leistungsstellung von zumindest 1 einzustellen. Durch diese Abfrage wird vermieden, dass versehentlich eine Videoaufnahme bei nicht betriebener Schwimm- und Tauchhilfe 10 gestartet wird. Vorzugsweise weist die Schwimm- und Tauchhilfe 10 eine Entkopplung der Energieübertragung auf den Propeller auf, sodass auch bei stehender Schwimm-und Tauchhilfe 10 Videoaufnahmen getätigt werden können. Nach der ersten Nachrichtausgabe 92.1 springt der Ablauf zurück zum Hauptmenü 90. Ergibt die Abfrage Leistungsstellung 91.2, dass eine Spannung an dem Elektromotor 30 anliegt, so wird in einer ersten Abfrage Speicherkapazität 91.3 die freie Speicherkapazität des Speichers für die Videoaufnahmen überprüft. Liegt die Speicherkapazität unter einem vorgegebenen Grenzwert, so erfolgt in einer zweiten Nachrichtausgabe 92.2 ein Hinweis, dass für eine Videoaufnahme nicht genügend Speicherkapazität zur Verfügung steht und zuvor Dateien gelöscht werden müssen. Der Ablauf springt dann zurück zum Hauptmenü 90. Entspricht hingegen in der ersten Abfrage Speicherkapazität 91.3 die verfügbare Speicherkapazität dem Grenzwert oder liegt sie darüber, so erfolgt in einem Block Aufnahme Front 93.1 eine Videoaufnahme über die Frontkamera 65. Die von der Frontkamera 65 aufgenommen Videodaten werden dann auf dem Display 20 angezeigt und von dem digitalen Speicher aufgezeichnet. Während der Videoaufzeichnung wird in einer zweiten Abfrage SE 91.4 der Schaltzustand des Schaltelements 16.2 und in einer zweiten Abfrage Speicherkapazität 91.5 die verfügbare Speicherkapazität abgefragt. Wird das Schaltelement 16.2 während der Videoaufnahme betätigt, so wird diese beendet und der Ablauf springt zum Hauptmenü 90. Erreicht während der Videoaufnahme mit der Frontkamera 65 die Speicherkapazität des Speichers einen zweiten Grenzwert, so wird die Videoaufnahme beendet und die Benutzerführung zum Hauptmenü 90 geleitet. Während der Videoaufnahme über die Frontkamera 65 wird weiterhin über die erste Abfrage US 91.6 der Schaltzustand des Umschalters 16.3 abgefragt. Wird dieser gedrückt, so wird die laufende Videoaufnahme der Frontkamera 65 beendet und es folgt in einem Block Aufnahme Rück 93.2 eine Videoaufnahme mit der rückwärts gerichteten Rückkamera 50. Auch diese Videoaufnahme wird gespeichert und auf dem Display 20 angezeigt. Entsprechend der Aufnahme mit der Frontkamera 65 wird auch während der Aufnahme mit der Rückkamera 50 in einer dritten Abfrage SE 91.7 der Schaltzustand des Schaltelements 16.2, in einer dritten Abfrage Speicherkapazität 91.8 die freie Speicherkapazität des Datenspeichers und in einer zweiten Abfrage US 91.9 der Schaltzustand des Umschaltelements 16.3 abgefragt. Bei Betätigung des Schaltelements 16.2 bzw. bei unterschreiten des zweiten Grenzwertes für die Speicherkapazität wird die Videoaufnahme beendet und die Benutzerführung zum Hauptmenü 90 geleitet. Durch Betätigung des Umschaltelements 16.3 wird die Videoaufnahme über die Rückkamera 50 ebenfalls beendet und eine neue Videoaufnahme über die Frontkamera 65 gestartet.

Vorzugsweise ist der Grenzwert für die Speicherkapazität bei der ersten Abfrage Speicherkapazität 91.3 mit beispielsweise 2GByte größer gewählt als der zweite Grenzwert bei der zweiten Abfrage Speicherkapazität 91.5 mit beispielsweise 1GByte.

Durch die Anordnung der beiden Kameras 50, 65 ist es möglich, Videoaufnahmen sowohl in Fahrtrichtung als auch von dem Fahrer aufzunehmen. Dabei ermöglichen das an einem Haltegriff 16.1 angebrachte Schaltelement 16.2 und das ebenfalls an einem Haltegriff 16.1 angebrachte Umschaltelement 16.3 auch bei sportlicher Fahrweise eine einfache Bedienung des Videosystems. Durch die vorgesehene Wi-Fi-Schnittstelle können Daten mit externen Geräten ausgetauscht werden. Durch die digitale Verbindung zwischen der Steuerelektronik 70 und der Motorsteuerung können über die Wi-Fi-Schnittstelle auch Daten an die Motorsteuerung und/oder für sonstige Hardwarekomponenten der Schwimm - und Tauchhilfe, beispielsweise die Ansteuerung der Kameras und/oder für die Ansteuerung des Displays und /oder für das Akkumanagement (Akkusteuerung) geschickt bzw. empfangen werden. Somit ermöglicht das Videosystem eine zusätzliche Funktionalität, indem beispielsweise Software-Updates auf die Motorsteuerung und/oder die sonstigen vorerwähnten Hardwarekomponenten übertragen werden können. Durch die Integration der Frontkamera 65 in den Rumpf 11 ist es möglich, in Fahrtrichtung gerichtete Aufnahmen zu tätigen. Dabei führt die Integration der Frontkamera 65 in den Rumpf 11 zu geringen Vibrationen und damit zu störungsfreien Videoaufnahmen. Die Videoqualität ist insbesondere durch eine zusätzliche Versteifung des Frontkamera-Aufnahmebereichs 80 des Rumpfes 11 deutlich verbessert.

## Patentansprüche

1. Schwimm- und Tauchhilfe (10) mit einem Rumpf (11), der einen Strömungskanal (34) aufweist oder dem ein Strömungskanal (34) zugeordnet ist, wobei dem Strömungskanal (18) eine motorbetriebene Wasser-Beschleunigungsanordnung, insbesondere ein Propeller, zugeordnet ist, mit einer Auflagefläche (11.3) für einen Oberkörper auf einer Oberseite des Rumpfes (11), mit an der Schwimm- und Tauchhilfe (10) angebrachten Haltegriffen (16), wobei an den Haltegriffen (16) Bedienelemente (16.1) zur Steuerung der Wasser-Beschleunigungsanordnung mittels einer zugeordneten Motorsteuerung vorgesehen sind, und mit einem der Auflagefläche (11.3) zugewandten Display (20) zur Anzeige von Betriebsparametern der Schwimm-und Tauchhilfe (10),
**dadurch gekennzeichnet,**
**dass** in Fahrtrichtung vor der Auflagefläche (11.3) eine nach vorne ausgerichtete Frontkamera (65) in dem Rumpf (11) integriert und mit einer Steuerelektronik (70) verbunden ist, dass die Frontkamera (65) dazu ausgelegt ist eine Videoaufnahme zu tätigen, dass die Steuerelektronik (70) zur Ansteuerung der Frontkamera (65) und zum Empfang der Kamerasignale ausgebildet ist, dass an zumindest einem Haltegriff (16) ein Schaltelement (16.2) zum Starten und zum Beenden einer Videoaufnahme angeordnet ist, dass die Frontkamera (65) in einer wasserdichten Kameraeinhausung (64) angeordnet ist, dass die wasserdichte Kameraeinhausung (64) in einer Frontkamera-Aufnahme (83) innerhalb des Rumpfes (11) aufgenommen und an dem Rumpf (11) der Schwimm- und Tauchhilfe (10) befestigt ist, dass die Rumpf-Außenhülle in Blickrichtung der Frontkamera (65) eine Kameradurchführung (81) aufweist, in der eine transparente Scheibe (61) angeordnet ist, und dass die transparente Scheibe (61) die wasserdichte Kameraeinhausung (64) frontseitig abschließt.

2. Schwimm- und Tauchhilfe (10) nach Anspruch 1,
**dadurch gekennzeichnet,**
**dass** vor der Auflagefläche (11.3) eine nach hinten ausgerichtete Rückkamera (50) angeordnet und mit der Steuerelektronik (70) verbunden ist und dass die. Rückkamera (50) dazu ausgelegt ist eine Videoaufnahme zu tätigen.

3. Schwimm- und Tauchhilfe (10) nach Anspruch 1 oder 2,
**dadurch gekennzeichnet,**
**dass** an zumindest einem Haltegriff (16) ein Umschaltelement (16.3) zum Umschalten zwischen der Rückkamera (50) und der Frontkamera (65), über welche die Videoaufnahme jeweils erfolgt, angeordnet ist.

4. Schwimm- und Tauchhilfe (10) nach einem der Ansprüche 1 bis 3,
**dadurch gekennzeichnet,**
**dass** das Display (20) mit der Steuerelektronik (70) der Rückkamera (50) oder der Frontkamera (65) verbunden und dazu ausgelegt ist, die mit der jeweils ausgewählten Rückkamera (50) oder der Frontkamera (65) getätigte Aufnahme anzuzeigen.

5. Schwimm- und Tauchhilfe (10) nach einem der Ansprüche 1 bis 4,
**dadurch gekennzeichnet,**
**dass** eine LCD-Anzeige (22) des Displays (20), die Rückkamera (50) und die Steuerelektronik (70) in einem wasserdicht ausgebildeten, einteiligen oder zweiteiligen Gehäuse angeordnet sind.

6. Schwimm- und Tauchhilfe (10) nach Anspruch 5,
**dadurch gekennzeichnet,**
**dass** das wasserdicht ausgebildete Gehäuse zumindest im Bereich der LCD-Anzeige (22) oder im Bereich der LCD-Anzeige (22) und der Rückkamera (50) von einer transparenten Displayabdeckung (21) abgedeckt ist.

7. Schwimm- und Tauchhilfe (10) nach einem der Ansprüche 1 bis 6,
**dadurch gekennzeichnet,**
**dass** die Steuerelektronik (70) über einen Datenbus mit der Motorsteuerung verbunden ist, dass die Schaltsignale des Schaltelements (16.2) und/oder des Umschaltelements (16.3) der Motorsteuerung zugeführt sind und dass die Steuerelektronik (70) dazu ausgebildet ist, die Schaltsignale des Schaltelements (16.2) und/oder des Umschaltelements (16.3) von der Motorsteuerung abzufragen.

8. Schwimm- und Tauchhilfe (10) nach einem der Ansprüche 1 bis 7,
**dadurch gekennzeichnet,**
**dass** die Steuerelektronik (70) dazu ausgebildet ist, die Videoaufnahme zu ermöglichen, wenn eine Spannung an einem Elektromotor (30) der Wasser-Beschleunigungsanordnung anliegt und die Videoaufnahme nicht zu ermöglichen, wenn keine Spannung an dem Elektromotor (30) der Wasser-Beschleunigungsanordnung anliegt.

9. Schwimm- und Tauchhilfe (10) nach einem der Ansprüche 1 bis 8,
**dadurch gekennzeichnet,**
**dass** die Steuerelektronik (70) dazu ausgebildet ist, die Videoaufnahme zu ermöglichen, wenn eine freie Speicherkapazität eines Speichers für die Videoaufnahmen einem vorgegebenen Grenzwert entspricht oder den vorgegebenen Grenzwert überschreitet und die Videoaufnahme nicht zu ermöglichen, wenn die freie Speicherkapazität des Speichers für die Videoaufnahmen den vorgegebenen Grenzwert unterschreitet und/oder dass die Steuerelektronik (70) dazu ausgebildet ist, die Videoaufnahme zu unterbrechen, wenn die freie Speicherkapazität des Speichers für die Videoaufnahmen einen vorgegebenen zweiten Grenzwert unterschreitet.

10. Schwimm- und Tauchhilfe (10) nach einem der Ansprüche 1 bis 9,
**dadurch gekennzeichnet,**
**dass** die Steuerelektronik (70) eine Funkschnittstelle, insbesondere eine Wi-Fi-Schnittstelle/W-Lan-Schnittstelle und/oder eine Bluetooth-Schnittstelle, aufweist und dass die Steuerelektronik (70) dazu ausgebildet ist, über die Funkschnittstelle Videodaten zu übertragen und/oder Software-Updates für einzelne oder mehrere Hardwarekomponenten der Schwimm - und Tauchhilfe, beispielsweise die Ansteuerung der der Rückkamera (50) und/oder der Frontkamera (65) und/oder für die Ansteuerung des Displays und/oder für die Motorsteuerung und /oder für das Akkumanagement zu empfangen.

11. Schwimm- und Tauchhilfe (10) nach einem der Ansprüche 1 bis 10,
**dadurch gekennzeichnet,**
**dass** der Frontkamera (65) und/oder der Rückkamera (50) ein Mikrofon zugeordnet ist und dass die aufgenommenen Audiosignale der Steuerelektronik (70) zugeführt sind.

12. Schwimm- und Tauchhilfe (10) nach einem der Ansprüche 1 bis 11,
**dadurch gekennzeichnet,**
**dass** die Frontkamera (65) über eine digitale Schnittstelle, insbesondere eine USB-Schnittstelle, und ein Datenkabel mit der Steuerelektronik (70) verbunden ist.

13. Schwimm- und Tauchhilfe (10) nach einem der Ansprüche 1 bis 12,
**dadurch gekennzeichnet,**
**dass** die Rückkamera (50) über eine digitale Schnittstelle, insbesondere eine MIPI-Schnittstelle, mit der Steuerelektronik (70) verbunden ist.

14. Schwimm- und Tauchhilfe (10) nach einem der Ansprüche 1 bis 13,
**dadurch gekennzeichnet,**
**dass** die Frontkamera-Aufnahme (83) in räumlicher Verbindung zu einem Flutungsraum (19) der Schwimm- und Tauchhilfe (10) steht.

15. Schwimm- und Tauchhilfe (10) nach einem der Ansprüche 1 bis 14,
**dadurch gekennzeichnet,**
**dass** die transparente Scheibe (61) oder ein Scheibengehäuse (63), in dem die transparente Scheibe (61) gehalten ist, gegenüber der Kameradurchführung (81) abgedichtet ist oder dass zwischen der transparenten Scheibe (61) oder dem Scheibengehäuse (63), in dem die transparente Scheibe (61) gehalten ist, und der Kameradurchführung (81) ein wasserdurchgängiger Spalt ausgebildet ist.

16. Schwimm- und Tauchhilfe (10) nach einem der Ansprüche 1 bis 15,
**dadurch gekennzeichnet,**
**dass** die transparente Scheibe (61) und/oder eine Scheibenfassung (63.1) des Scheibengehäuses (63), in der die transparente Scheibe (61) gehalten ist, oval ausgeführt ist.

17. Schwimm- und Tauchhilfe (10) nach einem der Ansprüche 1 bis 16,
**dadurch gekennzeichnet,**
**dass** das Scheibengehäuse (63) abgedichtet mit der Kameraeinhausung (64) verbunden ist und dass das Scheibengehäuse (63) und die Kameraeinhausung Arretiermittel aufweisen, welche sowohl in axialer Richtung als auch in Umfangsrichtung eine eindeutige Ausrichtung des Scheibengehäuses (63) gegenüber der Kameraeinhausung (64) vorgeben.

18. Schwimm- und Tauchhilfe (10) nach einem der Ansprüche 1 bis 17,
**dadurch gekennzeichnet,**
**dass** die Kameraeinhausung (64) rückseitig von einem wasserdicht auf die Kameraeinhausung (64) aufsteckbaren Gehäuseverschluss (66) abgeschlossen ist und dass ein Datenkabel zur Übertragung der Videodaten an die Steuerelektronik (70) wasserdicht durch den Gehäuseverschluss (66) geführt ist.

19. Schwimm- und Tauchhilfe (10) nach einem der Ansprüche 1 bis 18,
**dadurch gekennzeichnet,**
**dass** der Rumpf (11) im Bereich der Frontkamera-Aufnahme (83) versteift ausgebildet ist.

## Claims

1. A swimming and diving aid (10), having a hull (11) which comprises a flow channel (34) or with which a flow channel (34) is associated, a motor-driven water acceleration arrangement, in particular a propeller, being associated with the flow channel (18); having a support surface (11.3) for an upper body on an upper side of the hull (11); having grips (16) mounted on the swimming and diving aid (10), control elements (16.1) for controlling the water acceleration arrangement by means of an associated motor controller being provided on the grips (16); and having a display (20), facing toward the support surface (11.3), for showing operating parameters of the swimming and diving aid (10),
**characterized**
**in that** a forward-directed front camera (65) is integrated into the hull (11) in front of the support surface (11.3) in a direction of travel, and is connected to an electronic control system (70); in that the front camera (65) is adapted for video capture; wherein the electronic control system (70) is embodied to apply control to the front camera (65) and to receive camera signals; in that a switching element (16.2) for starting and ending a video capture is arranged on at least one grip (16); in that the front camera (65) is arranged in a watertight camera enclosure (64); in that the watertight camera enclosure (64) is received in a front camera receptacle (83) inside the hull (11) and fastened to the hull (11) of the swimming and diving aid (10); in that the outer envelope of the hull comprises, in the viewing direction of the front camera (65), a camera passthrough (81) in which a transparent window (61) is arranged; and in that the transparent window (61) closes off the watertight camera enclosure (64) at the front.

2. The swimming and diving aid (10) according to Claim 1, **characterized in that** a rearward-directed back camera (50) is arranged in front of the support surface (11.3) and is connected to the electronic control system (70); and wherein the back camera (50) is adapted for video capture.

3. The swimming and diving aid (10) according to Claim 1 or 2, **characterized in that** a switchover element (16.3), for switching over between the back camera (50) and the front camera (65) with which video capture is respectively occurring, is arranged on at least one grip (16).

4. The swimming and diving aid (10) according to one of Claims 1 to 3, **characterized in that** the display (20) is connected to the electronic control system (70) of the back camera (50) or the front camera (65) and is designed to show the image being acquired using the respectively selected back camera (50) or front camera (65).

5. The swimming and diving aid (10) according to one of Claims 1 to 4, **characterized in that** an LCD display element (22) of the display (20), the back camera (50), and the electronic control system (70) are arranged in a one- or two-part housing embodied to be watertight.

6. The swimming and diving aid (10) according to Claim 5, **characterized in that** the housing that is embodied to be watertight is covered by a transparent display covering (21) at least in the region of the LCD display element (22), or in the region of the LCD display element (22) and of the back camera (50).

7. The swimming and diving aid (10) according to one of Claims 1 to 6, **characterized in that** the electronic control system (70) is connected to the motor controller via a data bus; the switching signals of the switching element (16.2) and/or of the switchover element (16.3) are delivered to the motor controller; and the electronic control system (70) is embodied to retrieve the switching signals of the switching element (16.2) and/or of the switchover element (16.3) from the motor controller.

8. The swimming and diving aid (10) according to one of Claims 1 to 7, **characterized in that** the electronic control system (70) is embodied to enable the video capture if a voltage is applied to an electric motor (30) of the water acceleration arrangement, and not to enable the video capture if no voltage is applied to the electric motor (30) of the water acceleration arrangement.

9. The swimming and diving aid (10) according to one of Claims 1 to 8, **characterized in that** the electronic control system (70) is embodied to enable the video capture when a free memory capacity of a memory for the video captures corresponds to or exceeds a predefined limit value, and not to enable the video capture if the free memory capacity of the memory for the video captures falls below the predefined limit value; and/or the control unit (70) is embodied to interrupt the video capture if the free memory capacity of the memory for the video captures falls below a predefined second limit value.

10. The swimming and diving aid (10) according to one of Claims 1 to 9, **characterized in that** the electronic control system (70) comprises a radio interface, in particular a WiFi interface or WLAN interface and/or a Bluetooth interface; and the electronic control system (70) is embodied to transfer video data and/or to receive software updates for individual or several hardware components of the swimming and diving aid, for example for the back camera (50) or front camera (65)and/or for the display control system and/or for the motor controller and/or for the rechargeable-battery management system (rechargeable battery controller), via the radio interface.

11. The swimming and diving aid (10) according to one of Claims 1 to 10, **characterized in that** a microphone is associated with the front camera (65) and/or back camera (50); and the captured audio signals are delivered to the electronic control system (70).

12. The swimming and diving aid (10) according to one of Claims 1 to 11, **characterized in that** the front camera (65) is connected to the electronic control system (70) via a digital interface, in particular a USB interface, and a data cable.

13. The swimming and diving aid (10) according to one of Claims 1 to 12, **characterized in that** the back camera (50) is connected to the electronic control system (70) via a digital interface, in particular a MIPI interface.

14. The swimming and diving aid (10) according to one of Claims 1 to 13, **characterized in that** the front camera receptacle (83) is in physical communication with a flooding chamber (19) of the swimming and diving aid (10).

15. The swimming and diving aid (10) according to one of Claims 1 to 14, **characterized in that** the transparent window (61), or a window housing (63) in which the transparent window (61) is held, is sealed with respect to the camera passthrough (81); or a water-conveying gap is configured between the transparent window (61), or the window housing (63) in which the transparent window (61) is held, and the camera passthrough (81).

16. The swimming and diving aid (10) according to one of Claims 1 to 15, **characterized in that** the transparent window (61), and/or a window bezel (63.1) of the window housing (63) in which the transparent window (61) is held, is of oval configuration.

17. The swimming and diving aid (10) according to one of Claims 1 to 16, **characterized in that** the window housing (63) is connected sealedly to the camera enclosure (64); and the window housing (63) and the camera enclosure comprise locking means that define, in both an axial and a circumferential direction, an unequivocal orientation of the window housing (63) with respect to the camera enclosure (64).

18. The swimming and diving aid (10) according to one of Claims 1 to 17, **characterized in that** the camera enclosure (64) is closed off at the rear by a housing closure (66) that can be placed in watertight fashion onto the camera enclosure (64); and a data cable for transferring video data to the electronic control system (70) is guided in watertight fashion through the housing closure (66).

19. The swimming and diving aid (10) according to one of Claims 1 to 18, **characterized in that** the hull (11) is embodied in stiffened fashion in the region of the front camera receptacle (83).

## Revendications

1. Aide à la natation et à la plongée (10) comprenant un corps (11) qui présente un canal d'écoulement (34) ou auquel est associé un canal d'écoulement (34), un dispositif d'accélération de l'eau entraîné par un moteur, en particulier une hélice, étant associé au canal d'écoulement (18), avec une surface d'appui (11.3) pour le haut du corps sur une face supérieure du corps (11), avec des poignées (16) fixées sur l'aide à la natation et à la plongée (10), des éléments de commande (16.1) étant prévus sur les poignées (16) pour commander le dispositif d'accélération de l'eau au moyen d'une commande de moteur associée, et avec un écran (20) tourné vers la surface d'appui (11.3) pour l'affichage des paramètres de fonctionnement de l'aide à la natation et à la plongée (10), **caractérisé**
**en ce qu'**une caméra frontale (65) orientée vers l'avant est intégrée dans le corps (11) devant la surface d'appui (11.3) dans le sens de la marche et est reliée à une électronique de commande (70), en ce que la caméra frontale (65) est conçue pour réaliser un enregistrement vidéo, en ce que l'électronique de commande (70) est conçue pour commander la caméra frontale (65) et pour recevoir les signaux de la caméra, en ce qu'un élément de commande (16.2) est disposé sur au moins une poignée (16) pour démarrer et arrêter un enregistrement vidéo, en ce que la caméra frontale (65) est disposée dans un boîtier de caméra (64) étanche, en ce que le boîtier de caméra (64) étanche est logé dans un logement de caméra frontale (83) à l'intérieur du corps (11) et est fixé au corps (11) de l'aide à la natation et à la plongée (10), que l'enveloppe extérieure du corps présente, dans la direction de visée de la caméra frontale (65), un passage de caméra (81) dans lequel est disposée une vitre transparente (61), et que la vitre transparente (61) ferme le boîtier de caméra (64) étanche à l'avant.

2. Aide à la natation et à la plongée (10) selon la revendication 1,
**caractérisée**
**en ce qu'**une caméra arrière (50) orientée vers l'arrière est disposée devant la surface d'appui (11.3) et est reliée à l'électronique de commande (70) et en ce que la caméra arrière (50) est conçue pour réaliser un enregistrement vidéo.

3. Aide à la natation et à la plongée (10) selon la revendication 1 ou 2,
**caractérisée**
**en ce qu'**un élément de commutation (16.3) est disposé sur au moins une poignée (16) pour commuter entre la caméra arrière (50) et la caméra frontale (65) par l'intermédiaire desquelles l'enregistrement vidéo est effectué.

4. Aide à la natation et à la plongée (10) selon l'une des revendications 1 à 3, **caractérisée**
**en ce que** l'écran (20) est relié à l'électronique de commande (70) de la caméra arrière (50) ou de la caméra frontale (65) et est conçu pour afficher l'image enregistrée par la caméra arrière (50) ou la caméra frontale (65) sélectionnée.

5. Aide à la natation et à la plongée (10) selon l'une des revendications 1 à 4, **caractérisée**
**en ce qu'**un écran LCD (22) de l'écran (20), la caméra arrière (50) et l'électronique de commande (70) sont disposés dans un boîtier étanche, en une ou deux parties.

6. Aide à la natation et à la plongée (10) selon la revendication 5,
**caractérisée**
**en ce que** le boîtier étanche est recouvert d'un cache d'écran transparent (21) au moins dans la zone de l'écran LCD (22) ou dans la zone de l'écran LCD (22) et de la caméra arrière (50).

7. Aide à la natation et à la plongée (10) selon l'une des revendications 1 à 6, **caractérisée**
**en ce que** l'électronique de commande (70) est reliée à la commande du moteur par l'intermédiaire d'un bus de données, en ce que les signaux de commutation de l'élément de commande (16.2) et/ou de l'élément de commutation (16.3) sont transmis à la commande du moteur et en ce que l'électronique de commande (70) est conçue pour interroger les signaux de commutation de l'élément de commande (16.2) et/ou de l'élément de commutation (16.3) de la commande du moteur.

8. Aide à la natation et à la plongée (10) selon l'une des revendications 1 à 7, **caractérisée**
**en ce que** l'électronique de commande (70) est conçue pour permettre l'enregistrement vidéo lorsqu'une tension est appliquée à un moteur électrique (30) du dispositif d'accélération de l'eau et pour empêcher l'enregistrement vidéo lorsqu'aucune tension n'est appliquée au moteur électrique (30) du dispositif d'accélération de l'eau.

9. Aide à la natation et à la plongée (10) selon l'une des revendications 1 à 8, **caractérisée**
**en ce que** l'électronique de commande (70) est conçue pour permettre l'enregistrement vidéo lorsqu'une capacité de mémoire libre d'une mémoire pour les enregistrements vidéo correspond à une valeur limite prédéfinie ou dépasse la valeur limite prédéfinie et pour ne pas permettre l'enregistrement vidéo lorsque la capacité de stockage libre de la mémoire pour les enregistrements vidéo passe en dessous de la valeur limite prédéfinie et/ou que l'électronique de commande (70) est conçue pour interrompre l'enregistrement vidéo lorsque la capacité de stockage libre de la mémoire pour les enregistrements vidéo passe en dessous d'une deuxième valeur limite prédéfinie.

10. Aide à la natation et à la plongée (10) selon l'une des revendications 1 à 9, **caractérisée**
**en ce que** l'électronique de commande (70) comporte une interface radio, en particulier une interface Wi-Fi/W-Lan et/ou une interface Bluetooth, et en ce que l'électronique de commande (70) est conçue pour transmettre des données vidéo via l'interface radio et/ou de recevoir des mises à jour logicielles pour un ou plusieurs composants matériels de l'aide à la natation et à la plongée, par exemple la commande de la caméra arrière (50) et/ou de la caméra frontale (65) et/ou pour la commande de l'écran et/ou pour la commande du moteur et/ou pour la gestion de la batterie.

11. Aide à la natation et à la plongée (10) selon l'une des revendications 1 à 10, **caractérisée**
**en ce qu'**un microphone est associé à la caméra frontale (65) et/ou à la caméra arrière (50) et en ce que les signaux audios enregistrés sont transmis à l'électronique de commande (70).

12. Aide à la natation et à la plongée (10) selon l'une des revendications 1 à 11, **caractérisée**
**en ce que** la caméra frontale (65) est reliée à l'électronique de commande (70) par l'intermédiaire d'une interface numérique, en particulier une interface USB, et d'un câble de données.

13. Aide à la natation et à la plongée (10) selon l'une des revendications 1 à 12, **caractérisée**
**en ce que** la caméra arrière (50) est reliée à l'électronique de commande (70) par l'intermédiaire d'une interface numérique, en particulier une interface MIPI.

14. Aide à la natation et à la plongée (10) selon l'une des revendications 1 à 13, **caractérisée**
**en ce que** le logement de caméra frontale (83) est en liaison spatiale avec un espace d'inondation (19) de l'aide à la natation et à la plongée (10).

15. Aide à la natation et à la plongée (10) selon l'une des revendications 1 à 14, **caractérisée**
**en ce que** la vitre transparente (61) ou un boîtier de vitre (63) dans lequel est maintenue la vitre transparente (61) est étanche par rapport au passage de caméra (81) ou en ce qu'un interstice perméable à l'eau est formé entre la vitre transparente (61) ou le boîtier de vitre (63) dans lequel est maintenue la vitre transparente (61) et le passage de caméra (81).

16. Aide à la natation et à la plongée (10) selon l'une des revendications 1 à 15, **caractérisée**
**en ce que** la vitre transparente (61) et/ou une monture de vitre (63.1) du boîtier de vitre (63) dans laquelle est maintenue la vitre transparente (61) est de forme ovale.

17. Aide à la natation et à la plongée (10) selon l'une des revendications 1 à 16,
**caractérisée**
**en ce que** le boîtier de vitre (63) est relié de manière étanche au boîtier de caméra (64) et que le boîtier de vitre (63) et le boîtier de caméra comportent des moyens de blocage qui imposent un alignement univoque du boîtier de vitre (63) par rapport au boîtier de caméra (64) aussi bien dans la direction axiale que dans la direction circonférentielle.

18. Aide à la natation et à la plongée (10) selon l'une des revendications 1 à 17, caractérisée
en que le boîtier de caméra (64) est fermé à l'arrière par un couvercle de boîtier (66) pouvant être emboîté de manière étanche sur le boîtier de caméra (64) et qu'un câble de données destiné à la transmission des données vidéo à l'électronique de commande (70) est guidé de manière étanche à travers le couvercle de boîtier (66).

19. Aide à la natation et à la plongée (10) selon l'une des revendications 1 à 18, **caractérisée**
**en ce que** le corps (11) est renforcé dans la zone du logement de caméra frontale (83).
